# EUROPEAN PATENT SPECIFICATION

(11) **EP 1 782 948 B1**
(45) Date of publication and mention of the grant of the patent: **05.05.2010**
(21) Application number: 06122255.0
(22) Date of filing: 13.10.2006
(51) Int. Cl.: B32B 33/00, B29C 51/14, B29C 45/14, B29L 9/00, B29L 31/30, B29K 101/12

(54) **Curved casing formed from thermoplastic resin and film having a polarizing effect, and method for fabricating the casing**
Gekrümmtes Gehäuse aus thermoplastischem Harz und eine Folie mit einem polarisierenden Effekt, und Herstellungsverfahren des Gehäuses
Carénage courbe formé de résine thermoplastique et d'un film a effet polarisant, et méthode pour fabriquer ce carénage

(30) Priority: 08.11.2005 JP 2005323741; 27.12.2005 JP 2005376073; 17.05.2006 JP 2006138088
(43) Date of publication of application: 09.05.2007
(60) Divisional application: 07123625.1
(73) Proprietor: Fujitsu Component Limited, Tokyo 141-8630 (JP)
(72) Inventor: Yuba, Takashi, 2-chome Shinagawa-ku Tokyo 141-8630 (JP); Arita, Takashi, 2-chome Shinagawa-ku Tokyo 141-8630 (JP); Kaneko, Masahiro, 2-chome Shinagawa-ku Tokyo 141-8630 (JP)
(74) Representative: Skone James, Robert Edmund

(56) References cited:
- EP-A2- 0 202 930
- EP-A2- 0 940 244
- EP-A2- 1 464 479
- WO-A-99/13280
- DE-A1- 10 236 810
- US-A- 6 083 335
- US-A1- 2002 109 256
- US-A1- 2004 231 783
- US-A1- 2006 068 128
- US-B1- 6 305 028

## Description

### BACKGROUND OF THE INVENTION

### 1. Field of the Invention

The present invention relates to a casing formed from a thermoplastic resin and to a method for fabricating the casing. More particularly, it relates to a casing made of a thermoplastic resin to which a film having a polarizing effect is laminated to thereby provide special decorative effects to the casing that has a three-dimensional structure having an outwardly protruding portion containing a curved surface and to a method for fabricating such a casing.

### 2. Description of the Related Art

Traditionally, a casing such as a container for holding an article therein or a case in which an electronic part is housed, or a casing such as a vehicle bumper, motorcycle cowl, helmet, or the like, has been fabricated in three dimensions by assembling plates made of a metal or synthetic resin or like material, or has been molded as a one-piece, three dimensional structure from a single plate. When coloring the exterior surface of the thus fabricated casing for decorative purposes, it has been practiced to paint the surface of the casing or attach a colored sheet to it when the casing is made of metal. In the case of a casing made of a synthetic resin, on the other hand, it has been practiced to color the synthetic resin itself or to attach a colored sheet to it. Further, it is known in the art to provide metallic luster to the casing surface by employing techniques such as plating, metal evaporation, etc.

In the resin casing fabricated by the prior art technique, the decorative color applied to the casing surface is fixed and does not change at all or, if it does change, the change is limited. For example, when a transparent colored sheet is attached to the casing surface, the change is such that the color of the colored sheet and the color of the casing itself seen through the transparent sheet are overlaid one on top of the other to present a mixture of the two colors, and not such that the color changes in appearance according to the way it is viewed.

DE 10236810 A1 discloses a method for manufacturing a decorated article, for example a housing of a mobile telephone, which has a curved surface region in the body thereof. EP0202930 A2 discloses a process for forming a plastic article by forming, or forging and thermo-forming, a stacked plurality of layers of thermoplastic material.

As one method of providing special color effects, there has been proposed a method that uses the principle of holography and creates image plane members to be applied to three-dimensional surfaces, thereby achieving a casing on which image shapes, colors, etc. change in various ways depending on the viewing angle. However, creating the images to be reproduced, in particular in white light, in accordance with the principle of holography requires a sophisticated technique and involves an increased cost; therefore, the method that uses the principle of holography is not a suitable method for fabricating inexpensive casings.

Apart from the method using the principle of holography described above, a decoration method with simple design that makes color patterns, on a polyhedral body or a curved body change, in various ways depending on the viewing angle has been proposed, for example, in Japanese Unexamined Patent Publication Nos. 2001-341500 and 2002-55621. In this decoration method, the casing having a polyhedral structure or a curved structure is formed from a transparent or translucent material, and the interior or exterior surface of the casing is covered with a plurality of polarizing films or plate pieces. In another proposed decoration method, a decorative thin-film member, for example, a polarizing film, is bonded to one plane surface of an inorganic or resin substrate formed in a flat plate shape, to enhance the richness in decoration and to confer depth and three-dimensional effects to a texture.

As described above, in the decoration method proposed in Japanese Unexamined Patent Publication No. 2001-341500, polarizing films or plate pieces are applied to the exterior or interior surface of the casing, and it is a tedious and time-consuming process to decorate the casing. Also, it is not possible to cover the entire exterior or interior surface of the casing. As a result, if the films or pieces are applied to the polygonal or curved faces of the casing, the decorative effect does not extend over the entire surface of the casing, and the effect is limited.

On the other hand, in the decoration method proposed in Japanese Unexamined Patent Publication No. 2002-55621, a polarizing film is bonded to a substrate to confer the depth and three-dimensional effects to a texture. According to this decoration method, the decorative qualities can be provided easily and neatly, provided that the substrate is formed in a flat plate shape. However, this is not always the case with casings made of synthetic resin, because resin casings often are constructed in a variety of exterior shapes.

With the above method, if the surface has a protruding portion having a curved surface such as described by a three-dimensional curve, it is difficult to bond a single polarizing film evenly and without creasing over the entire surface of the protruding portion in conformity with the curved surface. If the polarizing film is to be bonded only to a flat surface portion of the casing, the polarizing film can be bonded without creasing, but if the flat surface portion has a protruding portion formed thereon, it is difficult to bond the polarizing film evenly and without creasing over the surface of the protruding portion.

In view of the above situation, it is an object of the present invention to provide a thermoplastic resin casing on which a protrusion is formed in a variety of ways and the entire surface of the casing is covered with a polarizing film, to provide special decorative effects to the casing, wherein the casing is fabricated either by molding a laminated structure constructed by bonding the polarizing film to a thermoplastic resin plate or by injection-molding a thermoplastic resin onto the polarizing film formed in a prescribed shape.

### SUMMARY OF THE INVENTIONS

To solve the above problem, according to the present invention, there is provided a thermoplastic resin casing having a protrusion of a prescribed shape containing a curved surface, the thermoplastic resin casing characterized in that a film having an optical interference effect is attached so as to conform to said prescribed shape of a thermoplastic resin body which forms said protrusion, and said film is formed by laminating a plurality of thin films of different refractive indices, wherein each thin film partially reflects incident light rays at a first surface of the thin film and partially refracts those rays, the refracted rays being reflected at a second surface of the thin film and thereafter passing out through the first surfaces of the thin films where the rays reflected by the second surfaces of the thin films interfere with the rays reflected by the first surfaces.

The film is laminated to the thermoplastic resin body by interposing an adhesive layer therebetween or by interposing an adhesive layer and a binding layer therebetween; alternatively, the film is laminated to the thermoplastic resin body under heat and pressure, or laminated under heat and pressure by interposing an adhesive layer therebetween.

At least one surface of the film is embossed, or the thermoplastic resin body and the film laminated together are provided with projections and depressions.

The thermoplastic resin body is colored, or the thermoplastic resin body is formed from a transparent plate and an interior surface of the protrusion is decorated partially or entirely in a single color or in a plurality of colors.

A surface of the film is decorated with marks.

The film is attached to both an exterior side and an interior side of the thermoplastic resin body that forms the protrusion.

A colorless or colored and transparent or translucent cover layer is deposited on top of the film attached to the thermoplastic resin body.

According to the present invention, there is also provided a method for fabricating a thermoplastic resin casing having a protrusion of a prescribed shape containing a curved surface, the method characterized in that
a first film having an optical interference effect and formed by laminating a plurality of thin films of different refractive indices, is placed on a mold having a recess of a prescribed shape, wherein each thin film partially reflects incident light rays at a first surface of the thin film and partially refracts those rays, the refracted rays being reflected at a second surface of the thin film and thereafter passing out through the first surfaces of the thin films where the rays reflected by the second surfaces of the thin films interfere with the rays reflected by the first surfaces, and
an injection molding die is placed onto said mold with said first film interposed therebetween, and said thermoplastic resin casing is hot formed together with said first film by injecting a thermoplastic resin into a recess formed by said first film.

A laminated plate is fabricated by laminating a film having a polarizing effect on to a thermoplastic resin plate, the laminated plate is placed on a mold with the film facing the mold, and the thermoplastic resin casing is formed by vacuum forming, by air-pressure forming or by press forming.

The film is laminated to the thermoplastic resin plate by an adhesive or by interposing an adhesive layer and a binding layer therebetween; alternatively, the film is laminated to the thermoplastic resin plate under heat and pressure, or laminated under heat and pressure by interposing an adhesive therebetween.

The laminated structure is formed into the prescribed shape having projections and depressions by using a mold on which projections and depressions are formed.

Preferably the method may further comprise fabricating a thermoplastic resin casing, wherein a film having a polarizing effect is placed on a mold having a recess of a prescribed shape, and the film is formed into the shape of the recess, wherein, after forming the film, an injection molding die is placed onto the mold with the film interposed therebetween, and the thermoplastic resin casing is formed by injecting a thermoplastic resin into a recess formed by the film.

The injection molding die has a protrusion that matches the recess formed by the film, wherein the film is placed on the mold and is formed into the shape of the recess by being pressed into the recess.

The film is placed on the mold and is formed into the shape of the recess by evacuating air from the recess, wherein the air is evacuated from the recess through a plurality of evacuation holes formed in the mold, or the air is evacuated from the recess through an edge portion where the film contacts the recess.

The mold has a small recessed portion which communicates with the recess through an edge portion where the film contacts the recess, wherein the air is evacuated from the recess through an evacuation hole formed in the small recessed portion.

An adhesive layer is formed on a bonding surface of the film, a binding layer is formed on an upper surface of the adhesive layer, the bonding surface of the film is treated by a surface-reforming treatment to facilitate adhesion, and the adhesive layer is formed on the surface treated by the surface-reforming treatment or the adhesive layer is formed by interposing the binding layer on the surface treated by the surface-reforming treatment.

The method may be further adapted in that a first film having a polarizing effect is placed on a first mold having a recess of a prescribed shape, and the first film is formed into the shape of the recess; a second film having a polarizing effect is placed on a second mold having a protrusion of a shape that matches the recess, and the second film is formed into the shape of the protrusion; and the thermoplastic resin casing is formed by injecting a thermoplastic resin between the first film and the second film.

The first and second films are formed by applying vacuum or by applying pressure.

Preferably the method for fabricating a thermoplastic resin casing is further adapted in that: a film having a polarizing effect is placed on a mold having a recess of a prescribed shape, and the film is formed into the shape of the recess; after forming the film, an injection molding die is placed onto the mold with the film interposed therebetween, and a thermoplastic resin plate is formed by injecting a thermoplastic resin into a recess formed by the film; and a colorless or colored and transparent or translucent cover layer is formed on top of the film.

In the method for fabricating a thermoplastic resin casing according to the present invention, after said thermoplastic resin casing is formed, unwanted portions are removed by trimming.

The method for fabricating a thermoplastic resin casing, may also be adapted in that a film having a polarizing effect is placed on a mold having a recess of a prescribed shape, an injection molding die is placed onto the mold with the film interposed therebetween, and the thermoplastic resin casing is produced by hot forming together with the film by injecting a thermoplastic resin between the film and the injection molding die.

An adhesive layer is formed on a bonding surface of the film, a binding layer is formed on an upper surface of the adhesive layer, the bonding surface of the film is treated for enhanced adhesion, or the adhesive layer is formed on the surface treated for enhanced adhesion; further, the adhesive layer is formed by interposing the binding layer on the surface treated for enhanced adhesion.

As described above, according to the present invention, as the resin casing is fabricated by molding a laminated structure constructed by laminating a film having a polarizing effect onto a thermoplastic resin plate or by injection-molding a thermoplastic resin onto the film formed in a prescribed shape or alternatively by hot forming with the polarizing film and the thermoplastic resin simultaneously, the polarizing film can be bonded neatly and without creasing over the entire surface of the casing even when the casing has a protrusion formed in a variety of ways. Accordingly, in addition to the decoration applied to the thermoplastic resin plate itself, the depth and three-dimensional effects can be conferred to a texture over the entire surface of the casing having a three-dimensional structure, and thus special effects, such as smoothly changing iridescent color effects, that cannot be applied to the casing by such techniques as colored resin, painting, plating, evaporation, etc. can be easily provided to the casing.

Further, by embossing the film having the polarizing effect, a decorative effect that causes the surface of the casing to glitter like a pearl, by the reflection of ambient light can be easily applied over the entire surface of the casing on which a protrusion is formed in a variety of ways. Furthermore, when projections and depressions are formed on the mold used for molding the laminated structure constructed by laminating the polarizing film to the thermoplastic resin plate, a pattern of projections and depressions can be formed on the casing provided with special decoration.

Moreover, as the thermoplastic resin casing of the present invention has a laminated structure constructed by laminating a polarizing film to a thermoplastic resin plate, its special decorative effect is stable and free from discoloration which could occur in the case of decoration applied by such techniques as colored resin, painting, plating, evaporation, etc.

### BRIEF DESCRIPTION OF THE DRAWINGS

Other features, objects and advantages of the present invention will become apparent from the following description of preferred embodiments with reference to the drawings in which like reference characters designate like or corresponding parts throughout several views, and in which:
Figure 1 is a cross-section view for explaining a thermoplastic resin casing according to a first embodiment of the present invention in which decoration is applied to a thermoplastic resin;
Figure 2 is a diagram for explaining a configuration example of a polarizing film;
Figure 3 is a diagram for explaining the principle of thin-film interference in a multilayer film;
Figure 4 is a flowchart for explaining a first specific example of a fabrication process for the thermoplastic resin casing of the present invention;
Figure 5 is a diagram for explaining a molding step in the fabrication process of the thermoplastic resin casing according to the first specific example;
Figure 6 is a flowchart for explaining a second specific example of the fabrication process for the thermoplastic resin casing of the present invention;
Figures 7A and 7B are cross-sectional views for explaining a first example of ornamentation to be applied to the thermoplastic resin casing of the present invention;
Figures 8A to 8D are process diagrams for explaining a third specific example of the fabrication process for the thermoplastic resin casing of the present invention;
Figure 9 is a diagram for explaining a thermoplastic resin casing according to a second embodiment of the present invention;
Figures 10A to 10C are diagrams for explaining a procedure for mounting a polarizing film on a mold;
Figures 11A to 11D are process diagrams for explaining a fourth specific example of the fabrication process for the thermoplastic resin casing of the present invention;
Figures 12A to 12D are process diagrams for explaining a fifth specific example of the fabrication process for the thermoplastic resin casing of the present invention;
Figures 13A to 13C are diagrams for explaining provisions made to address the distortion occurring in the polarizing film when pressed into the mold;
Figure 14 is a diagram for explaining a thermoplastic resin casing according to a third embodiment of the present invention;
Figure 15 is a diagram for explaining how the polarizing film is pressed into the mold in the fabrication process of the thermoplastic resin casing according to the third embodiment;
Figures 16A to 16D are process diagrams for explaining a sixth specific example of the fabrication process for the thermoplastic resin casing of the present invention;
Figure 17 is a diagram for explaining a thermoplastic resin casing according to a fourth embodiment of the present invention;
Figures 18A and 18B are process diagrams for explaining a seventh specific example of the fabrication process for the thermoplastic resin casing of the present invention;
Figures 19A and 19B are process diagrams for explaining the remainder of the fabrication process according to the seventh specific example;
Figures 20A to 20C are diagrams for explaining a thermoplastic resin casing according to a fifth embodiment of the present invention;
Figure 21 is a diagram for explaining a fabrication step for the thermoplastic resin casing of the fifth embodiment;
Figures 22A to 22F are diagrams for explaining methods for enhancing the adhesion between the polarizing film and the thermoplastic resin in the thermoplastic resin casing according to the present invention;
Figures 23A to 23C are diagrams for explaining a second example of ornamentation to be applied to the thermoplastic resin casing of the present invention;
Figure 24 is a cross-sectional view for explaining a specific example according to the second example of ornamentation;
Figures 25A and 25B are cross-sectional views for explaining other specific examples according to the second example of ornamentation;
Figures 26A to 26D are process diagrams for explaining a modified example of the fourth specific example of the fabrication process for the thermoplastic resin casing shown in Figures 11A to 11D;
Figures 27A and 27B are diagrams for explaining examples in which the thermoplastic resin casings produced in accordance with the fabrication methods of the first to fifth embodiments are applied to a personal computer and its related products;
Figures 28A to 28C are diagrams for explaining examples in which the thermoplastic resin casings produced in accordance with the fabrication methods of the first to fifth embodiments are applied to portable electronic appliances;
Figures 29A and 29B are diagrams for explaining examples in which the thermoplastic resin casings produced in accordance with the fabrication methods of the first to fifth embodiments are applied to household electrical appliances;
Figures 30A and 30B are diagrams for explaining examples in which the thermoplastic resin casings produced in accordance with the fabrication methods of the first to fifth embodiments are applied to furniture or fittings;
Figures 31A to 31C are diagrams for explaining examples in which the thermoplastic resin casings produced in accordance with the fabrication methods of the first to fifth embodiments are applied to products such as stationery, ornaments, toys, etc.;
Figures 32A and 32B are diagrams for explaining examples in which the thermoplastic resin casings produced in accordance with the fabrication methods of the first to fifth embodiments are applied to vehicle interior and exterior decorative parts;
Figures 33A and 33B are cross-sectional views showing a portion of a casing according to the prior art; and
Figure 34 is a cross-sectional view for explaining the shape of the casing according to the prior art.

### DESCRIPTION OF THE PREFERRED EMBODIMENTS

Embodiments of a casing formed from a thermoplastic resin according to the present invention will be described below with reference to the drawings. However, before proceeding to the description of the casing according to the present invention, a previously proposed thermoplastic resin casing will be described in order to clarify the features and advantages of the present invention.

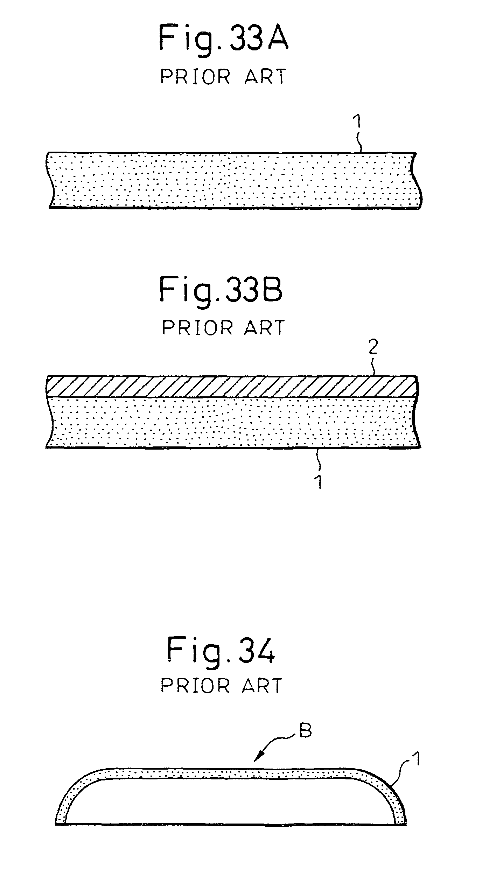

As shown in the cross-sectional view of Figure 33A, in the case of a casing made of a synthetic resin, the resin plate 1 itself which constitutes the casing is colored to provide decoration to the casing. Alternatively, as shown in the cross-sectional view of Figure 33B, a colored sheet or a metallic thin film is attached or deposited as a decorative member 2 over the surface of the resin plate 1 that constitutes the casing.

According to this decoration method, when the substrate is formed in a flat plate shape, decoration can be provided easily and neatly. However, when the casing B is formed so as to have an outwardly protruding portion, as shown in the cross-sectional view of Figure 34, for example, when the entire casing is formed in a dish- or bowl-like shape as shown, a curved surface is formed around the entire circumference of the exterior surface of the casing B.

Even when the exterior surface of the casing contains a curved surface, if the curved surface is uniaxial, a polarizing film can be bonded without creasing over the entire exterior surface. However, in the case of the casing B shown in Figure 34 in which a curved surface such as described by a three-dimensional curve is formed along the entire circumference of the protruding portion, it is difficult to bond a single polarizing film evenly and without creasing over the entire surface of the protruding portion so as to conform with the curved surface. If the polarizing film is to be bonded only to a flat surface portion of the casing B, the polarizing film can be bonded without creasing, but if the flat surface portion has a protruding portion formed thereon, it is difficult to bond the polarizing film evenly and without creasing over the surface of the protruding portion.

In view of the above, in the present invention, a thermoplastic resin casing on which a protrusion is formed in a variety of ways, and the entire surface of which is covered with a polarizing film to provide special decorative effects to the casing, is fabricated either by molding a laminated structure constructed by bonding the polarizing film to a thermoplastic resin plate or by injection-molding a thermoplastic resin onto the polarizing film formed in a prescribed shape.

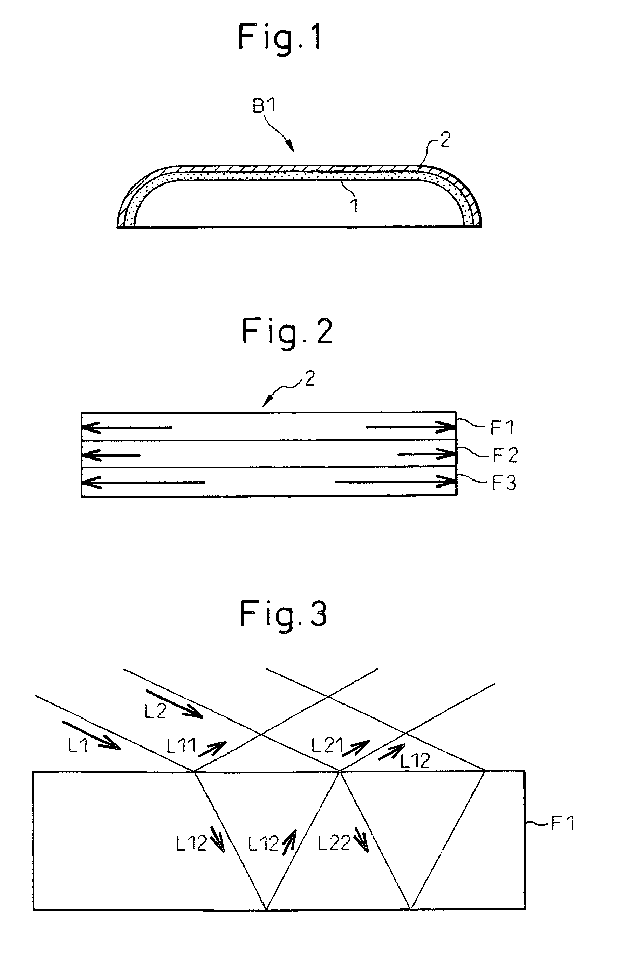

Next, embodiments of the thermoplastic resin casing according to the present invention and its fabrication method will be described with reference to the drawings. Figure 1 shows a cross section of a thermoplastic resin casing according to a first embodiment. The shape of the thermoplastic resin casing B1 shown in Figure 1 is similar to that of the casing B shown in Figure 34.

The casing according to the first embodiment is not limited to one whose shape is similar to that of the casing B shown in Figure 34, but can be any casing that has a shape having an outwardly protruding portion, such as a container for holding an article therein or a case in which an electronic part is housed; more specifically, if the casing has a box-like three-dimensional shape, has intricate projections and depressions on its external surface, or has a partially protruding portion, the casing can be decorated according to the present embodiment. Furthermore, the present embodiment can be applied even when the casing is a lid member of a container, for example, the upper cover case of a computer mouse. Further, the embodiment can be applied not only to a casing such as a container for holding an article therein or a case in which an electronic part is housed, but also to a casing such as a vehicle bumper, motorcycle cowl, helmet, or the like.

While the casing B of Figure 34 is formed by simply molding a resin material, in the thermoplastic resin casing B1 of Figure 1 a film 2 having a polarizing effect is attached so as to cover the exterior surface of the resin plate 1, without creasing, over the entire structure of the casing. By attaching the film 2 over the entire surface of the resin plate 1, special decorative effects can be provided to the casing in addition to the decoration applied to the resin substrate 1 itself, the special decorative effects including, for example, an iridescent lustrous color effect that makes the luster of the casing smoothly change like iridescent colors according to the direction from which it is viewed.

The film having a polarizing effect (hereinafter called the polarizing film) used for the thermoplastic resin casing of the present invention will be described with reference to Figures 2 and 3. Figure 2 is a schematic cross-sectional view showing how the polarizing film is formed. In Figure 2, the polarizing film 2 is typically formed from thin films F1 to F3. The films F1 to F3 are each formed, for example, from a polyester film biaxially oriented as shown by arrows in Figure 2. The refractive index of each film changes according to the degree of the biaxial orientation. The degree of the biaxial orientation differs between the respective films F1 to F3, and these films are laminated together to form the polarizing film.

The laminated structure is not limited to the lamination of three films, but more than three films may be laminated. In the example shown here, biaxially oriented polyester films are used as the films to be laminated, but the polarizing film may be formed by combining films of dissimilar materials, such as polyester film and nylon film, because the polarizing film can be formed by combining films of different refractive indices.

Generally, a multilayer thin film formed by stacking thin films of different refractive indices is known to exhibit, depending on how they are stacked, a multilayer thin-film interference phenomenon of an ideal type in which light in the visible wavelength range is nearly perfectly reflected, providing a metallic luster, or a multilayer thin-film interference phenomenon of non-ideal type in which the wavelength range of reflected light is limited and the reflectance drops, producing colors corresponding to the wavelengths of the reflected light. In the polarizing film used for the thermoplastic casing of the present invention, the refractive index and thickness of each constituent film are adjusted so as to produce various decorative effects by utilizing the thin-film interference phenomena.

By referring to Figure 3, a description will be given of how decorative effects are produced by the polarizing film formed as described above. Of the films F1 to F3 forming the polarizing film 2, the outermost film F1 is shown in Figure 3 as a representative example. When a visible light ray L1 is incident on the surface of the film F1, part of the visible light ray L1 is reflected as a light ray L11 and the remaining part is refracted as a light ray L12 into the film F1. The refracted light ray L12 is reflected at the bottom of the film F1 and reaches the surface of the film F1 in the same plane as the point of incidence of the light ray L11, where the light ray L12 is refracted and exits the film F1. Of course, depending on the film thickness, the light is not perfectly reflected at the bottom of the film, but part of the light ray L12 enters the film F2; therefore, actually the light ray L12 as the reflected light is part of the refracted light ray L12.

On the other hand, a visible light ray L2 is incident on the point at which the light ray L12 exits; like the visible light ray L1, the visible light ray L2 incident on the surface of the film F1 is partly reflected as a light ray L21 and partly refracted as a light ray L22 into the film F1. Here, at the point of incidence of the visible light ray L2, a thin-film interference phenomenon occurs with the reflected light ray L21 interfering with the exiting light ray L12. This results in the generation of a light ray at a wavelength different from the wavelengths of the visible light rays L1 and L2. When a plurality of thin films are stacked, at the point of incidence of visible light the reflected light ray at the point of incidence interferes with a plurality of exiting light rays.

In this way, by utilizing the thin-film interference phenomena of the polarizing film formed from a lamination of thin films, different colors can be produced without using colorants or a metallic luster can be achieved without using a metal film. On the other hand, when white light, not visible light, is incident on the polarizing film, the white light is decomposed due to the prism effect of the film into light rays of rainbowlike colors ranging from long to short wavelengths, and the light rays thus decomposed interfere with each other at the points of incidence of the white light, resulting in the production of iridescent decorative effects.

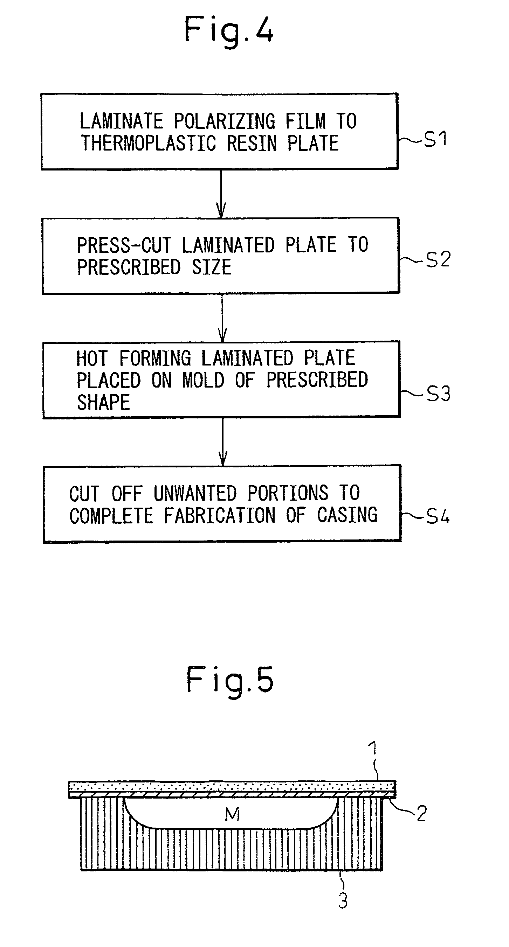

Next, referring to Figures 4 to 6, methods for fabricating the thermoplastic resin casing to which the above-described polarizing film is attached will be described by taking as an example the shape of the casing of the first embodiment shown in Figure 1. For the material for forming the thermoplastic resin casing of the present invention, use can be made of acrylic resin, ABS, PVC-based resin, polycarbonate, polyethylene terephthalate, polystyrene, polypropylene, polyethylene, ethylene-vinyl acetate copolymer, polystyrol, etc. The polarizing film can be formed, for example, by laminating biaxially oriented polyester films as described above.

The fabrication steps of the thermoplastic resin casing according to the first embodiment will be described with reference to the flowchart shown in Figure 4. First, the thermoplastic resin plate 1 and the polarizing film 2 are laminated together to construct a laminated plate (step S1). Here, the thickness of the thermoplastic resin plate 1 should be chosen so as to provide the necessary strength for the casing, and the plate may be supplied, for example, in the form of a sheet. The thermoplastic resin plate 1 and the polarizing film 2 may be bonded together by an adhesive or by thermocompression.

Next, the laminated plate is press-cut to a prescribed size (step S2). The thus cut laminated plate is placed on a mold having a recess of a prescribed shape, and is thermoformed on the mold (step S3).

Figure 5 shows how the laminated plate is thermoformed. A cross-sectional view is shown in Figure 5; as shown, the mold 3 has a recess whose shape matches the outer shape of the casing shown in Figure 1, and over which the laminated plate of the thermoplastic resin plate 1 and the polarizing film 2, press-cut to the prescribed size, is placed with the polarizing film 2 facing the recess.

When thermoforming the casing of the prescribed shape by vacuum forming on the mold 3, the laminated structure is pressed into the mold 3 by evacuating air through an evaluation hole formed in the bottom of the recess of the mold 3, though such an evaluation hole is not shown in Figure 5. On the other hand, when thermoforming the casing of the prescribed shape by air-pressure forming on the mold 3, the laminated structure is pressed into the mold 3 by applying pressurized air from above the laminated structure placed over the recess of the mold 3. Further, when thermoforming the casing of the prescribed shape by press forming on the mold 3, the laminated structure is pressed into the mold 3 by pressing thereon a female press mold having a shape that matches the recess of the mold 3, though such a press mold is not shown in Figure 5.

Next, the laminated plate thermoformed in step S3 is removed from the mold 3, and unwanted portions of the laminated plate are cut off to complete the fabrication of the thermoplastic resin casing having the shape shown in Figure 1 (step S4). According to the casing fabrication method described above, as the entire surface of the thermoplastic resin plate 1 of the shape having an outwardly protruding portion can be uniformly covered with the polarizing film 2 without causing creases in the polarizing film, a decorative effect that shows iridescent lustrous colors when viewed from any angle can be provided over the entire surface of the casing.

In the fabrication method for the thermoplastic resin case of the first embodiment described above, the laminated plate has been press-cut to the prescribed size before the thermoforming step but, rather than press-cutting the laminated plate before thermoforming, the laminated plate may be supplied in the form of a continuous sheet in the thermoforming step, and only the portion corresponding to the casing may be punched out after the thermoforming.

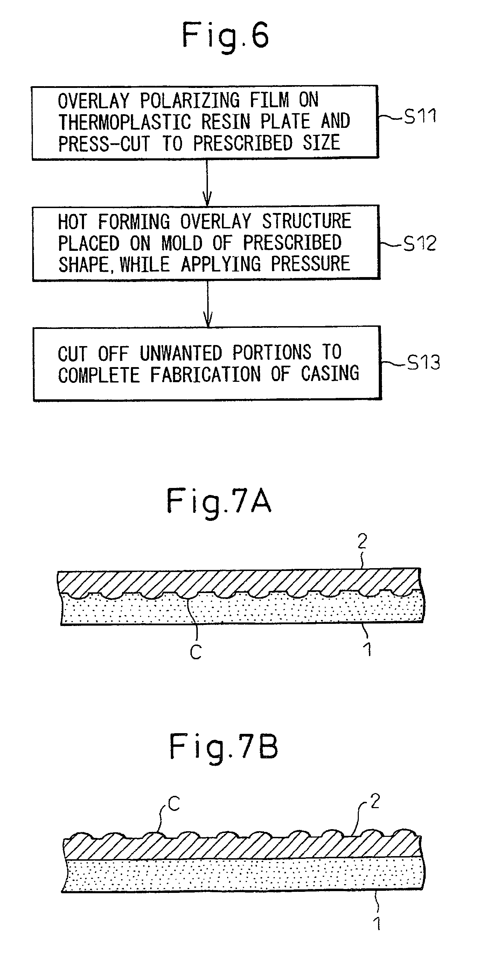

Further, in the fabrication method described above, the thermoplastic resin plate 1 and the polarizing film 2 have been bonded together to construct the laminated plate in a step preparatory to the thermoforming step but, instead, the thermoplastic resin plate 1 and the polarizing film 2 may be laminated together during the thermoforming. The fabrication of the thermoplastic resin casing according to this method is shown as a second specific example in the flowchart of Figure 6. In this method also, the thermoplastic resin casing of the shape shown in Figure 1 is fabricated using the mold 3 shown in Figure 5.

First, the thermoplastic resin plate 1 with the polarizing film 2 overlaid thereon is press-cut to a prescribed size (step S11). The thermoplastic resin plate 1 and the polarizing film 2, press-cut to the prescribed size, are placed on the mold 3 with the polarizing film 2 facing down. At this time, the thermoplastic resin plate 1 and the polarizing film 2 are not yet bonded together, but are just overlaid, one on top of the other.

Next, as in the case of the press forming earlier described, a female press mold having a shape that matches the recess of the mold 3 is pressed onto the mold 3 shown in Figure 5, thereby thermoforming the thermoplastic resin plate 1 and the polarizing film 2 into the prescribed shape while, at the same time, bonding them together under pressure (step S12). The thermoplastic resin casing is thus thermoformed to conform with the shape of the recess of the mold 3; then, the thus formed structure is removed from the mold 3, and unwanted portions of the thermoplastic resin plate 1 and the polarizing film 2 are cut off to complete the fabrication of the thermoplastic resin casing having the shape shown in Figure 1 (step S13).

In the above casing fabrication method also, the entire surface of the thermoplastic resin plate 1 having an outwardly protruding portion can be uniformly covered with the polarizing film 2 without causing creases in the polarizing film, and a decorative effect that shows iridescent lustrous colors when viewed from any angle can be provided over the entire surface of the casing. Here, rather than just bonding the thermoplastic resin plate 1 and the polarizing film 2 under pressure in step 12, the two members may be bonded together during the thermoforming by interposing an adhesive between them.

If the thermoplastic resin plate 1 used for the thermoplastic resin casing described above is colored in a desired color, the iridescent lustrous color effect can be provided over the entire surface of the casing by attaching the polarizing film 2; however, if it is desired to enhance the iridescent lustrous color effect, the resin plate should be black. When the resin plate is other than black, the iridescent lustrous color effect is rendered on the base color, producing a variety of decorative effects. On the other hand, when the thermoplastic resin plate 1 is formed from a colorless, transparent material, if the interior surface of the casing is colored by painting or like means, depth can be added to the decoration while also achieving decorative effects due to the iridescent lustrous colors. In this case, the interior surface of the casing may be painted partially or entirely in a single color or in a plurality of colors; for example, a pattern may be drawn on it, or logos using symbols or characters or the like may be included.

On the other hand, if the surface of the polarizing film 2 to be laminated to the thermoplastic resin plate 1 is embossed, a decorative effect that causes the surface of the casing to glitter like a pearl can be achieved. Figure 7A shows an example in which, to provide the pearl-like decorative effect, microscopic projections and depressions are formed by embossing on the surface of the polarizing film 2 that faces the resin plate, while Figure 7B shows an example in which microscopic projections and depressions are formed by embossing on the surface of the polarizing film 2 opposite from the surface facing the resin plate, i.e., on the exterior surface of the casing.

In this way, when numerous projections and depressions are formed by embossing on either one surface of the polarizing film 2, ambient light is reflected in various ways, causing the surface to glitter. Accordingly, when such microscopic projections and depressions are formed, the entire surface is caused to glitter like a pearl, and when the thermoplastic resin plate is white, the decorative effect that causes the color to change from pearly pink to pearly blue can be enhanced.

The mold 3 used in the fabrication process of the thermoplastic resin casing described above has been shown as just having a recess formed in a prescribed shape as shown in Figure 5, but if fine projections and depressions are formed on the surface of the recess of the mold 3, a press molding having a surface roughened according to the projections and depressions can be obtained by thermoforming. That is, a pattern conforming to the projections and depressions can be formed on the laminated plate consisting of the thermoplastic resin plate 1 and the polarizing film 1. In this case, decorative effects due to iridescent lustrous colors can be provided to the pattern of projections and depressions on the surface of the casing.

In the thermoplastic casing so far described, the polarizing film has been attached to the upper surface of the thermoplastic resin plate to form the surface of the casing, but when the thermoplastic resin plate is formed from a transparent material, decorative effects due to the iridescent lustrous colors can likewise be achieved even if the polarizing film is attached to the underside of the thermoplastic resin plate, i.e., the interior surface of the casing. In that case, when thermoforming, the laminated plate consisting of the thermoplastic resin plate 1 and the polarizing film 2 is placed on the mold 3 shown in Figure 5 by turning the laminated plate upside down from that shown, i.e., with the polarizing film 2 facing up.

Further, rather than fabricating the thermoplastic resin casing by laminating the polarizing film to the thermoplastic resin plate, the thermoplastic resin casing may be fabricated by first forming the polarizing film into a prescribed shape using a mold shaped to be able to form an outwardly protruding portion, and then forming the thermoplastic resin plate by injection molding a thermoplastic resin along the interior surface of the film formed in the prescribed size.

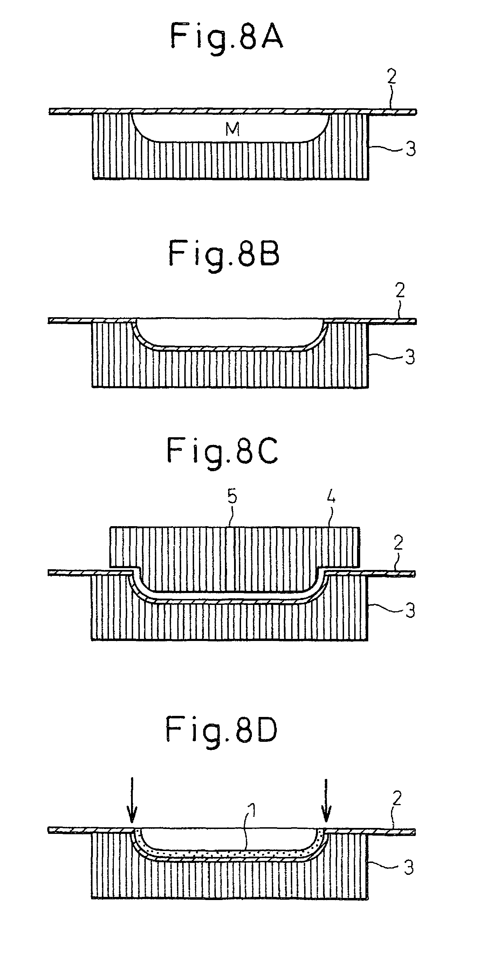

The fabrication process of the thermoplastic resin casing according to the above method is shown as a third specific example in Figures 8A to 8D. Figures 8A to 8D show cross-sectional views of the respective fabrication steps which are performed in the order shown. In the third specific example also, the thermoplastic resin casing is fabricated using the mold 3 shown in Figure 5.

First, in Figure 8A, the polarizing film 2 is placed on the mold 3 having the recess M formed in the prescribed shape. The polarizing film 2 here may be one that has been press-cut to prescribed size or may be in the form of a continuous sheet. Next, by evacuating air from the recess M of the mold 3 through an evacuation hole not shown, the polarizing film 2 is drawn into the recess by vacuum, thus thermoforming the polarizing film 2 into the prescribed shape as shown in Figure 8B.

After forming the polarizing film 2 into the prescribed shape, an injection molding die 4 having a shape that matches the shape of the recess M of the mold 3 is placed onto the mold 3, as shown in Figure 8C, by interposing therebetween the polarizing film 2 formed in the prescribed shape. Then, the thermoplastic resin is injected through an injection hole 5 formed in the injection molding die 4.

After the injected thermoplastic resin is formed into the prescribed shape in the recess of the mold 3, the injection molding die 4 is withdrawn; thus, the thermoplastic resin plate is formed into the prescribed shape conforming to the interior surface of the polarizing film 2 retained in the prescribed shape, as shown in Figure 8D. Then, the polarizing film 2 is trimmed at positions indicated by arrows shown in Figure 8D, to complete the fabrication of the thermoplastic resin casing having the shape shown in Figure 1.

Here, the injection molding die 4 may be equipped with a cutting facility such as a cutting blade so that the trimming can be done in the step shown in Figure 8C. In the fabrication method of the thermoplastic resin casing shown in Figures 8A to 8D, an embossing finish may be applied to the polarizing film, in which case a special decorative effect can be provided to the casing as earlier described.

Further, if projections and depressions are formed only on the mold 3 or on both the mold 3 and the injection molding die 4, a pattern of projections and depressions can be formed on the thermoplastic resin casing and, also, the thermoplastic resin can have any desired color. In the case of a colorless, transparent thermoplastic resin, decoration can be provided by painting the interior surface of the casing partially or entirely in a single color or in a plurality of colors after the injection molding.

The thermoplastic resin casing has been described for the case where a single polarizing film is attached to the exterior surface of the resin plate, without creasing, over the entire surface of the casing; in the fabrication process according to the first or second specific example, in order that the polarizing film 2 is attached over the entire surface of the casing formed from the resin plate 1, first a laminated plate is constructed by laminating the polarizing film to the resin plate, and then the laminated plate is formed into the prescribed shape of the mold, thereby producing the thermoplastic resin casing of the prescribed shape.

On the other hand, in the fabrication method hereinafter described for the fabrication of the thermoplastic resin casing of the prescribed shape, rather than using a laminated plate constructed by laminating the polarizing film to the resin plate, the polarizing film is first formed into the prescribed shape, and then the thermoplastic resin is injection-molded, thereby making the polarizing film adhere to the thermoplastic resin and thus fabricating the thermoplastic resin casing the entire surface of which is covered with the polarizing film.

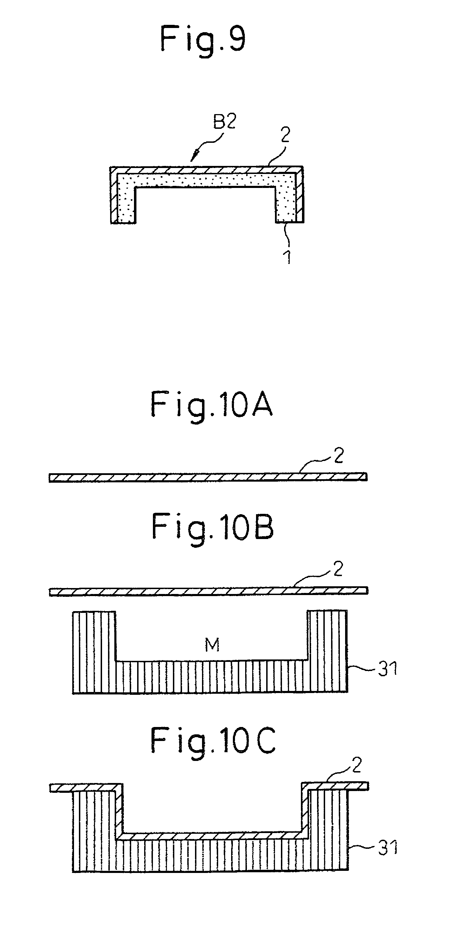

The above fabrication method, in which the polarizing film and the resin plate are bonded together in the molding step can be used to produce casings having the same shape as that of the casing of the first embodiment; besides, by changing the shape of the recess formed in the mold, thermoplastic resin casings of various shapes can be produced. Here, a description will be given by taking as an example the fabrication of a thermoplastic resin casing B2 that has a shape according to a second embodiment shown in Figure 9.

While thermoplastic resin casings of various shapes can be produced by changing the shape of the recess of the mold, it will be noted that, depending on the shape of the recess, the pressing force may not act evenly over the entire polarizing film when forming the polarizing film into shape. The polarizing film is constructed by laminating films differing in tensile force, and the uneven pressing force causes the tensile force to change locally. This change in tensile force causes the refractive index of the film to change, and the color of the portion of the polarizing film where the refractive index has changed appears different from other portions.

If this change in tensile force is actively exploited, the color of the polarizing film can be selectively changed, and a decorative effect of high quality can be achieved. For example, when the polarizing film is pressed so as to bend with a small radius as in the second embodiment shown in Figure 9, the tensile force of the polarizing film changes locally, causing the refractive index and hence the color in that portion to change. Therefore, if projections and depressions are suitably formed on the recessed surface of the mold so that this changing color principle can be actively exploited, a decorative effect that changes from portion to portion can be achieved, which serves to enhance the decoration.

Next, the fabrication method of the thermoplastic resin casing B2 according to the second embodiment of Figure 9 will be described for the case where the polarizing film is formed by being pressed into the recess M formed in the mold in accordance with the shape of the second embodiment. In this example, the earlier described polarizing film 2 is prepared as shown in Figure 10A. The polarizing film 2 may be prepared in the form press-cut to prescribed size or in the form of a continuous sheet.

As shown in Figure 10B, the polarizing film 2 is placed on the mold 31 provided with the recess M having the shape of the second embodiment. Here, the mold 31 is preheated to a suitable temperature so that the polarizing film 2 can be easily pressed into the mold 31. Next, as shown in Figure 10C, a pressing force is applied to the polarizing film 2, for example, by blowing air under pressure, thereby pressing the polarizing film 2 onto the interior surface of the recess M of the mold 31 and forming it into shape.

In the polarizing film formation shown in Figures 10A to 10C, the mold 31 has been heated to a suitable temperature in the step of Figure 10B; here, if the polarizing film 2 is also heated to a suitable temperature in the step of Figure 10A, the polarizing film can be easily deformed and can thus be easily pressed into the mold. In this case, as the polarizing film is made easily deformable, if the mold 31 is not preheated the polarizing film can be easily pressed into the mold. Further, instead of forming the polarizing film into shape by blowing air or the like under pressure, if the mold 31 is provided with one or more evacuation holes the polarizing film can be formed into shape by evacuating air from the recess M through the evaluation holes.

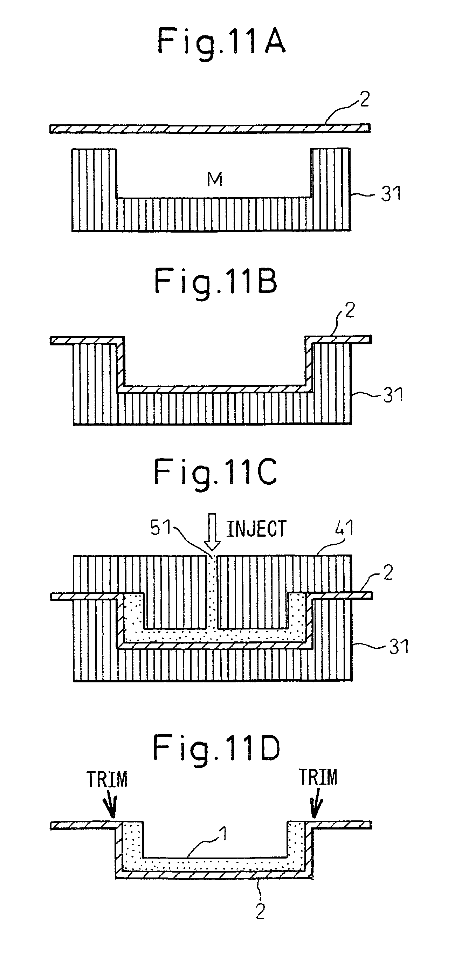

Next, a description will be given of a fourth specific example of the fabrication process of the thermoplastic resin casing B2 in which the press forming method is employed for forming the polarizing film 2. The fabrication process according to the fourth specific example is shown in Figures 11A to 11D which show the respective steps in cross-sectional views. As in the third specific example, the fabrication steps from Figures 11A to 11D are shown in the order of fabrication; in the fourth specific example, the thermoplastic resin casing B2 is fabricated using the mold 31 shown in Figure 10B.

First, in Figure 11A, the polarizing film 2 is placed on the mold 31 having the recess M formed in the prescribed shape. Next, as shown in Figure 11B, the polarizing film 2 is thermoformed into the prescribed shape by blowing air, or the like, under pressure.

After forming the polarizing film 2 into the prescribed shape, an injection molding die 41 having a shape that matches the shape of the recess M of the mold 31 is placed onto the mold 31, as shown in Figure 11C, by interposing therebetween the polarizing film 2 formed in the prescribed shape. Then, the thermoplastic resin is injected through an injection hole 51 formed in the injection molding die 41.

After the injected thermoplastic resin is formed into the prescribed shape in the recess M of the mold 31, the injection molding die 41 is withdrawn and the molding is removed from the mold 31; thus, the thermoplastic resin is formed into the prescribed shape conforming to the interior surface of the polarizing film 2 retained in the prescribed shape, as shown in Figure 11D. Then, the polarizing film 2 is trimmed at positions indicated by arrows shown in Figure 11D, to complete the fabrication of the thermoplastic resin casing B2 having the shape shown in Figure 9.

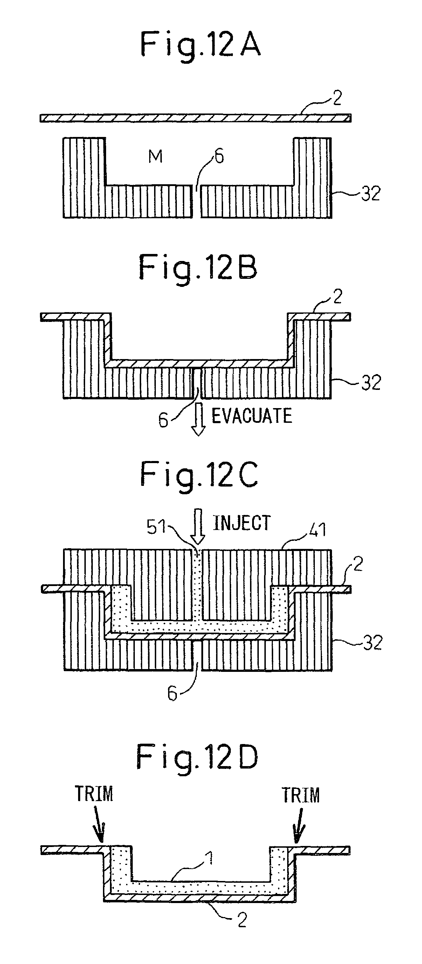

Figures 12A to 12D show a fifth specific example of the fabrication process of the thermoplastic resin casing in which one or more evacuation holes communicating with the recess of the mold are provided. In Figure 12A to 12D, one evacuation hole 6 formed in the mold 32 is shown as a representative example. First, in Figure 12A, the polarizing film 2 is placed on the mold 32 having the recess M formed in the prescribed shape. Next, as shown in Figure 12B, the polarizing film 2 is thermoformed into the prescribed shape by evacuating air from the recess M through the evacuation hole 6.

After forming the polarizing film 2 into the prescribed shape, the injection molding die 41 having a shape that matches the shape of the recess M of the mold 32 is placed onto the mold 32, as shown in Figure 12C, by interposing therebetween the polarizing film 2 formed in the prescribed shape. Then, the thermoplastic resin is injected through the injection hole 51 formed in the injection molding die 41.

After the injected thermoplastic resin is formed into the prescribed shape in the recess M of the mold 32, the injection molding die 41 is withdrawn and the molding is removed from the mold 32; thus, the thermoplastic resin is formed into the prescribed shape conforming to the interior surface of the polarizing film 2 retained in the prescribed shape, as shown in Figure 12D. Then, the polarizing film 2 is trimmed at positions indicated by arrows shown in Figure 12D, to complete the fabrication of the thermoplastic resin casing B2 having the shape shown in Figure 9.

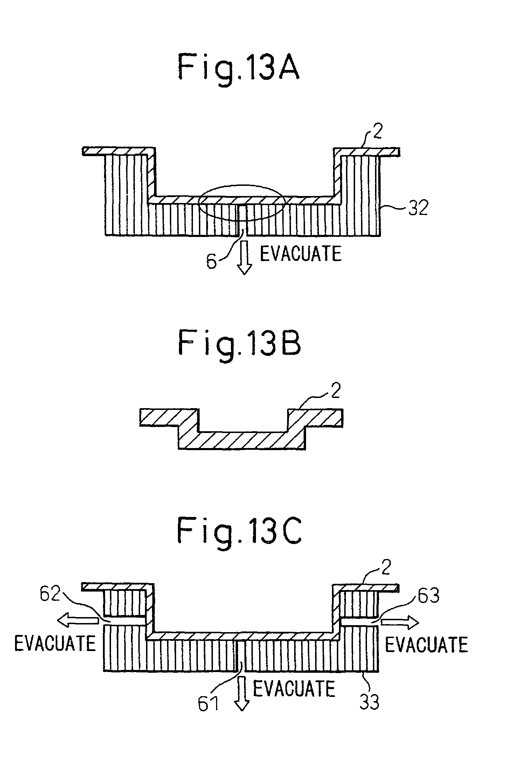

Here, when the mold used in the fabrication process according to the fifth specific example is provided with an evacuation hole communicating with the recess, an irregularly shaped portion such as shown in Figure 13B may be formed in the polarizing film 2 in the portion indicated by a circuit in Figure 13A. That is, since the polarizing film 2 is heated so that it can be easily formed, if the size of the evacuation hole is made large a portion of the polarizing film 2 which should be formed in a flat shape may be deformed by a suction force exerted through the evacuation hole 6.

In view of this, the diameter of the evacuation hole 6 formed in the mold 32 is determined according to the suction speed, and a plurality of evacuation holes are provided by suitably spacing them apart to prevent concentration of the suction force at one particular location; with this arrangement, the formation of irregularly shaped portions can be prevented.

Next, a description will be given of a thermoplastic resin casing fabrication method that can render clean decorative effects on the main surface of the casing by preventing the formation of irregularly shaped portions on the main surface of the casing when forming the polarizing film by evacuating air from the recess of the mold in accordance with the method of the fifth specific example described above.

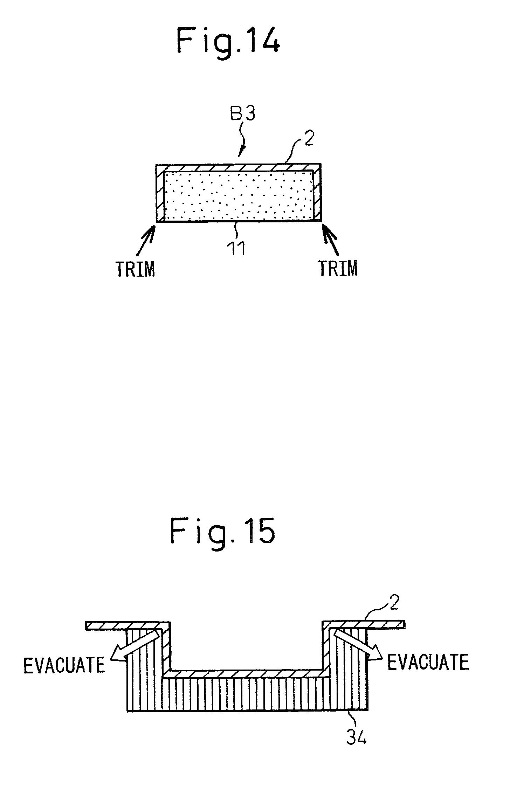

A third embodiment of the thermoplastic resin casing fabricated by the above fabrication method is shown in Figure 14. The third embodiment differs from the second embodiment shown in Figure 9 in that the thermoplastic resin 11 molded into one block forms the main body of the thermoplastic resin casing B3, the entire surface of which is covered with the polarizing film 2. As in the second embodiment, unwanted portions of the polarizing film are trimmed off at the edges of the thermoplastic resin casing B3 to complete the fabrication of the casing.

When fabricating the thermoplastic resin casing B3 according to the third embodiment, if an irregularly shaped portion such as shown in Figure 13B is formed on the main surface of the casing by a suction force during the formation of the polarization film, this may present a problem from the standpoint of decoration. One approach to avoiding this problem may be to provide a plurality of evacuation holes by suitably spacing them apart as shown in Figure 13C. On the other hand, even when an irregularly shaped portion is formed in an edge portion of the casing, if the main surface of the casing is free from such irregularly shaped portions, as in the third embodiment shown in Figure 14, the formation of such an irregularly shaped portion may not affect the decorative effect.

To address such a situation, the mold 34 used for forming the polarizing film 2 may be constructed so that the air can be evacuated in a concentrated manner through portions corresponding to the edges of the casing, as shown by arrows in Figure 15. According to this method, if irregularly shaped portions are formed in the polarizing film 2 at positions corresponding to the edges of the casing, as the main surface of the casing is free from such irregularly shaped portions, the problem that affects the decoration of the casing can be avoided. The fabrication process of the casing after the polarizing film 2 is formed on the mold 34 is the same as that of the fifth specific example shown in Figures 12A to 12D.

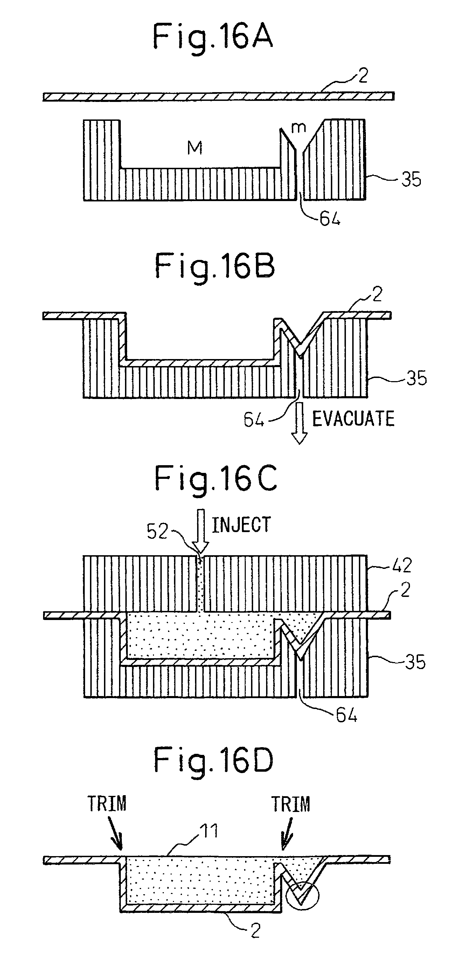

The above description has dealt with the case where the mold 34 for forming the polarizing film 2 is provided with evacuation holes at positions corresponding to the edges of the casing; next, referring to Figures 16A to 16D, a description will be given of a thermoplastic resin casing fabrication method according to a sixth specific example which employs an ingenious design to provide such an evacuation hole. In this example, a small recessed portion "m" is provided which communicates with the mold recess M for forming the polarization film 2, and the air is evacuated by way of the small recessed portion "m"; in this case, an irregularly shaped portion is formed in the polarizing film 2 at a position corresponding to an edge of the casing, but a casing whose main surface is free from irregularly shaped portions can be obtained.

As shown in Figure 16A, the small recessed portion "m" communicating with the recess M is typically formed in the mold 35. A plurality of such small recessed portions "m" may be provided around the recess M. The small recessed portion "m" is provided with an evacuation hole 64. First, in Figure 16A, the polarizing film 2 is placed on the mold 35 provided with the recess M formed in the prescribed shape and the small recessed portion "m" communicating with it. Next, as shown in Figure 16B, the air inside the recess M is evacuated by way of the small recessed portion "m" through the evacuation hole 64, and the polarizing film 2 is thermoformed to conform with the prescribed shape of the mold M and the shape of the small recessed portion "m".

After forming the polarizing film 2 into the prescribed shape, an injection molding die 42 having a flat mold face is placed onto the mold 32 by interposing therebetween the polarizing film 2 retained in the prescribed shape, as shown in Figure 16C. Then, the thermoplastic resin is injected through an injection hole 52 formed in the injection molding die 42.

After the injected thermoplastic resin is formed into the prescribed shape in the recess M and the small recessed portion "m" of the mold 35, the injection molding die 42 is withdrawn and the molding is removed from the mold 35; thus, the thermoplastic resin 11 is formed into the prescribed shape conforming to the interior surface of the polarizing film 2 retained in the prescribed shape, as shown in Figure 16D. Then, the polarizing film 2 is trimmed at positions indicated by arrows shown in Figure 16D, to complete the fabrication of the thermoplastic resin casing B3 according to the third embodiment shown in Figure 14.

Here, an irregularly shaped portion due to the evacuation hole 64 is formed in the polarizing film 2 at a position indicated by a circle in Figure 16D but, as the film is trimmed at the positions indicated by the arrows, the irregularly shaped portion is separated from the completed thermoplastic resin casing B3 and is thus isolated from the structure. Further, as the thermoplastic resin 11 is cut off at the position where the recess M meets the small recessed portion "m", the decorative effect of the polarizing film 2 cannot be obtained at this position, but this does not affect the decorative effect provided to the main surface of the thermoplastic resin casing B3.

The fabrication method of the thermoplastic resin casing according to the sixth specific example shown in Figures 16A to 16D has been described as applied to the fabrication of the casing of the third embodiment shown in Figure 14 in which the polarizing film is attached over the surface of the thermoplastic resin molded into one block; here, if the injection molding die 41 used in the fabrication method of the thermoplastic resin casing according to the fifth specific example shown in Figure 12C is used instead of the injection molding die 42 shown in Figure 16C, the thermoplastic resin casing B2 of the second embodiment shown in Figure 9 can be produced.

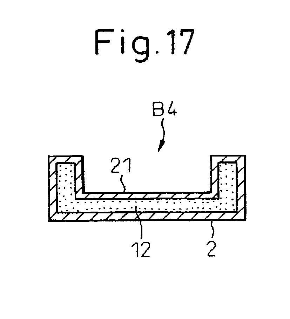

The first to third embodiments of the thermoplastic resin casings fabricated in accordance with the above-described fabrication methods have each concerned the case where the thermoplastic resin casing has a shape having an outwardly protruding portion, for example, a dish- or bowl-like shape, and the polarizing film is attached only to the exterior surface of the casing. Next, a method for fabricating a thermoplastic resin casing with the polarizing film attached to both surfaces thereof will be described with reference to Figures 17 to 19B.

Figure 17 shows a cross-sectional view of a thermoplastic resin casing B4 according to a fourth embodiment in which the polarizing film is attached to both surfaces of the casing. The thermoplastic resin casing B4 has a substantially cullis-like cross-sectional shape, and the decorative effect of the polarizing film is expected to be provided to both the exterior and interior surfaces of the casing, but the decorative effect need not be provided to its end faces.

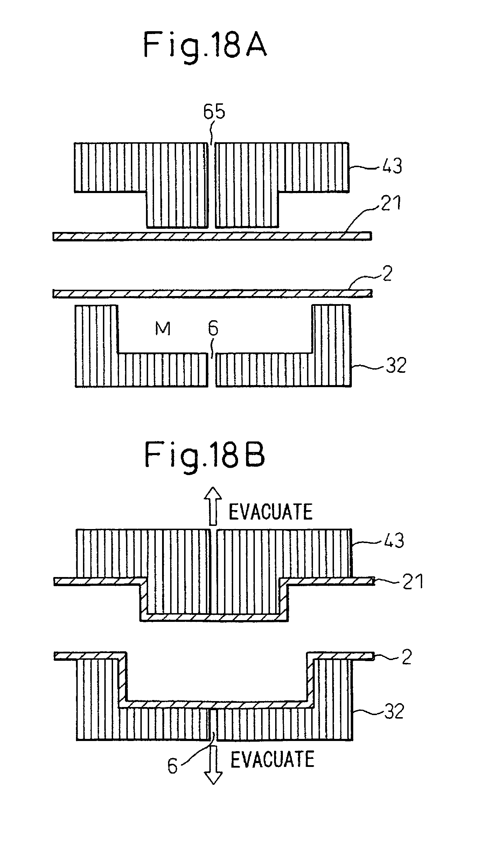

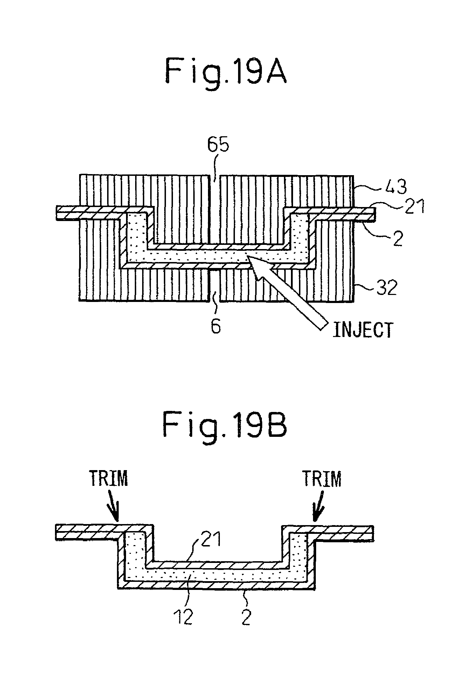

The fabrication method for the thermoplastic resin casing B4 according to the fourth embodiment is shown as a seventh specific example in Figures 18A and 18B and Figures 19A and 19B. Unlike the third to sixth specific examples so far described, the fabrication method according to the seventh specific example shown here requires the provision of two polarizing films and the use of two molds for forming the respective polarizing films.

First, in Figure 18A, an outside polarizing film 2 and an inside polarizing film 21 are prepared. The mold 32 for forming the polarizing film 2 is provided with a recess M of a prescribed shape, while the mold 43 for forming the polarizing film 21 is provided with a protrusion that matches the shape of the recess M. The polarizing film 2 is placed on the mold 32 and the polarizing film 21 on the mold 43.

Next, as shown in Figure 18B, the air inside the recess M is evacuated through an evacuation hole 6, and the polarizing film 2 is thus thermoformed into the prescribed shape conforming to the recess M. On the other hand, for the inside polarizing film 21, the air is evacuated through an evacuation hole 65 formed in the mold 43, and the polarizing film 21 is thus thermoformed to conform to the shape of the mold 43. In Figures 18A and 18B, one evaluation hole 65 provided in the mold 43 is shown as a representative example but, actually, a plurality of evacuation holes are provided because the mold face of the mold 43 has a protruding shape. Here, to form the polarizing film 21, the previous mentioned pressing method may be used instead of the vacuum drawing method.

After forming the polarizing film 2 into the shape of the recess M and the polarizing film 21 into the shape of the protrusion, the molds 32 and 43 are closed while maintaining the formed shapes of the respective films, as shown in Figure 19A. Here, a space having a shape that matches the shape of the casing of the fourth embodiment is formed between the polarizing films 2 and 21. Then, a thermoplastic resin is injected into the space from an edge of the space, i.e., from the direction perpendicular to the plane of the drawing, as shown by an arrow in Figure 19.

After the injected thermoplastic resin is formed into the prescribed shape conforming to the recess M of the mold 32, the molds 32 and 43 are separated and the molding is removed from the molds; thus, the thermoplastic resin 12 is formed into the prescribed shape between the polarizing films 2 and 21 respectively retained in the prescribed shape, as shown in Figure 19B. Then, the polarizing films 2 and 21 are trimmed at positions indicated by arrows in Figure 19B, to complete the fabrication of the thermoplastic resin casing B4 according to the fourth embodiment shown in Figure 17. In this thermoplastic resin casing B4, as the decorative effect is expected to be provided to the exterior and interior surfaces of the casing, if irregularly shaped portions are formed in the edge portions of the casing such irregularly shaped portions do not affect the decorative effect; here, the end portions, if unwanted, can be cut off.

In the embodiments of the thermoplastic resin casing so far described, the polarizing film has been attached to the surface of the thermoplastic resin. In these embodiments, the polarizing film provides decorative effects, such as iridescent color effects, changing color effects from pearly pink to pearly blue, etc. that cannot be achieved by colored resins, painting, plating, metal evaporation, etc., but there are cases where it is desired to add depth to these decorative effects to enhance the quality. In such cases, a clear coating is applied to the surface of the polarizing film. This coating also serves to enhance the weatherability, for example.

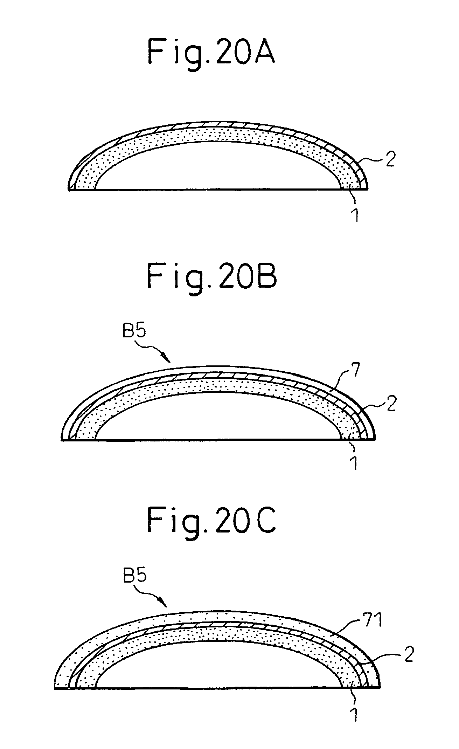

Figures 20A to 20C show a thermoplastic resin casing according to a fifth embodiment in which a clear coating is applied to the surface of the polarizing film. Figure 20A shows the structure of the thermoplastic resin casing to which the clear coating is to be applied. The polarizing film 2 is attached to the exterior surface of the thermoplastic resin 1 formed in the shape of the casing.

Figure 20B shows one example of the thermoplastic resin casing B5 according to the fifth embodiment. Here, a clear coat layer 7 is formed over the entire surface of the polarizing film 2 attached to the thermoplastic resin 1. The clear coat layer 7 need only have a certain degree of transmittance and may be colored.

Figure 20C shows an alternative example of the thermoplastic resin casing B5 according to the fifth embodiment. Here, a coat layer 71 of a thermoplastic resin is formed over the entire surface of the polarizing film 2 attached to the thermoplastic resin 1. Like the coat layer 7, this coat layer 71 also need only have a certain degree of transmittance and may be colored. The coat layer 71 is formed, for example, by double molding in which a resin molding is formed on top of the molded structure.

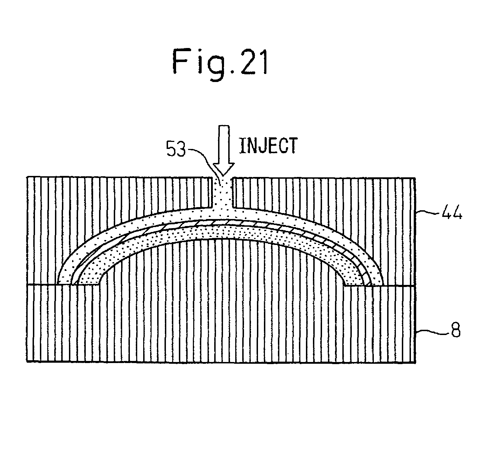

Figure 21 shows how the coat layer 71 in the alternative example of the thermoplastic resin casing B5 according to the fifth embodiment is molded from a resin. The mold 8 has a protrusion that matches the interior shape of the thermoplastic resin casing fabricated by the fabrication method of a selected one of the specific examples described above, and the thermoplastic resin casing is placed on this protrusion. An injection molding die 44 having a recess for forming the coat layer from the resin is placed above the mold 8. The thermoplastic resin is injected through an injection hole 53 formed in the molding die 44. After that, the mold 8 and the mold 44 are separated, to complete the fabrication of the thermoplastic resin casing B5 shown in Figure 20C.

In Figure 21, as the recess of the mold 44 is shaped to conform with the shape of the thermoplastic resin casing, the coat layer 71 formed from the resin has a uniform thickness; here, if projections and depressions are formed on the surface of the recess, an additional decorative effect can be provided.

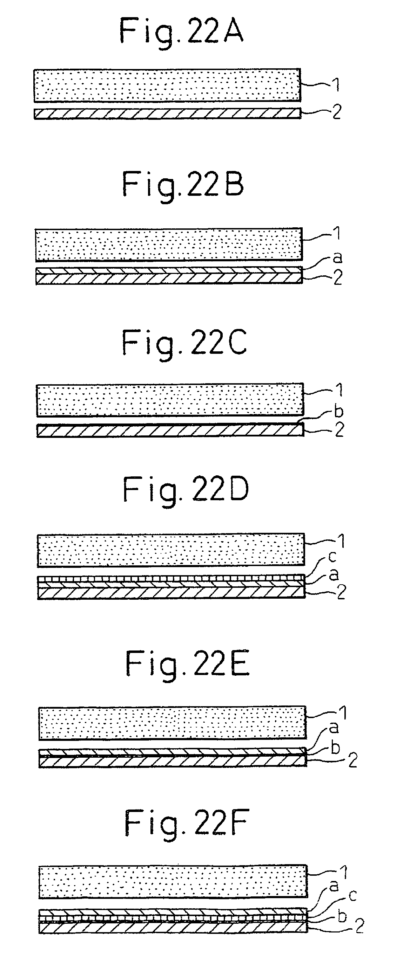

The above description has been given by focusing on the fabrication method of the thermoplastic resin casing according to each specific example; next, a description will be given of methods for enhancing adhesion between the thermoplastic resin and the polarizing film when bonding them together. Various methods for enhancing the adhesion are illustrated in Figures 22A to 22F. In each figure, the laminated structure is shown in cross section.

In Figure 22A, the thermoplastic resin 1 to be injection-molded and the polarizing film 2 are formed from the same kind of material in order to make the polarizing film 2 firmly adhere to the thermoplastic resin 1. For example, both are formed from polyester. In this case, the polarizing film and the thermoplastic resin are fused together, by the temperature of the resin itself, the applied pressure, or the temperature and the pressure, during the injection molding, or are firmly bonded together due to a force such as intermolecular attraction between the materials of the same kind.

In Figure 22B, the polarizing film 2 is coated in advance with an adhesive layer "a" in order to make the polarizing film 2 firmly adhere to the thermoplastic resin 1. For example, when the molding resin is PMMA, a layer of polyvinyl chloride-acetate copolymer is formed in advance as the adhesive layer "a" on the polarizing film. Due to the temperature of the resin itself, the applied pressure, or the temperature and the pressure during, the injection molding, the adhesive layer "a" exerts an adhesive strength, and the adhesion improves.

In Figure 22C, a surface reforming treatment "b" for facilitating adhesion, for example, is applied in advance to the contact surface of the polarizing film 2 in order to make the polarizing film 2 firmly adhere to the thermoplastic resin 1. With this reforming treatment "b", the adhesion between the thermoplastic resin 1 and the polarizing film 2 improves due to the temperature of the resin itself, the applied pressure, or the temperature and the pressure during the injection molding.

In Figure 22D, a binding layer "c" is formed in advance over the upper surface of the adhesive layer "a" on the polarizing film 2 in order to enhance the adhesion between the adhesive layer "a" and the thermoplastic resin 1 in the structure of Figure 22A. With this arrangement, the adhesion between the thermoplastic resin 1 and the polarizing film 2 improves due to the temperature of the resin itself, the applied pressure, or the temperature and the pressure during the injection molding.

In Figure 22E, a surface reforming treatment "b" for facilitating adhesion, for example, is applied in advance to the contact surface of the polarizing film 2 in order to enhance the adhesion between the adhesive layer "a" and the polarizing film 2 in the structure of Figure 22A. With this reforming treatment "b", the adhesion between the thermoplastic resin 1 and the polarizing film 2 improves due to the temperature of the resin itself, the applied pressure, or the temperature and the pressure during the injection molding.

In Figure 22F, a surface reforming treatment "b" for facilitating adhesion, for example, is applied in advance to the contact surface of the polarizing film 2 in order to enhance the adhesion between the adhesive layer "a" and the polarizing film 2 in the structure of Figure 22A, and a binding layer "c" for improving the adhesion between the adhesive layer "a" and the polarizing film 2 is formed on the surface treated by the reforming treatment "b". With this arrangement, the adhesion between the thermoplastic resin 1 and the polarizing film 2 improves due to resin temperature, pressure, or temperature and pressure during the injection molding.

Methods for enhancing the adhesion are not limited to the examples shown in Figures 22A to 22F. The adhesion between the polarizing film and the thermoplastic resin can also be enhanced by combining the adhesive layer, the binding layer, and the reforming treatment of the polarizing film surface in various ways other than those shown in the above examples.

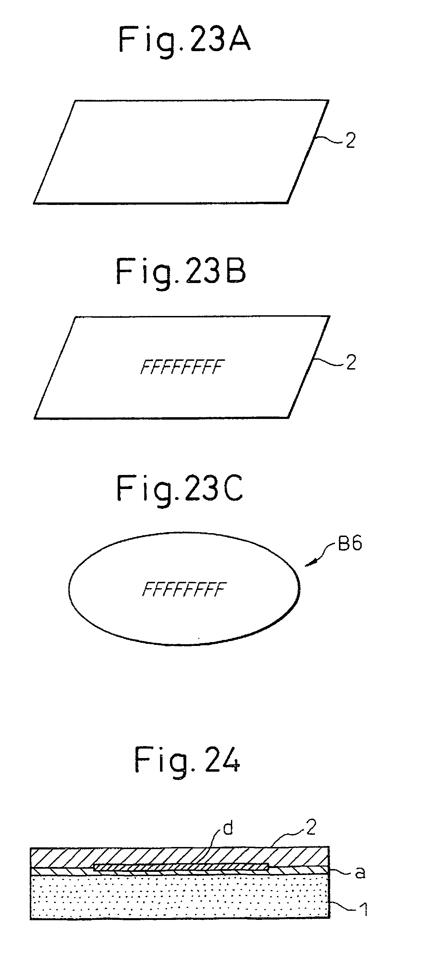

Next, examples of ornamentation to be applied to the thermoplastic resin casing to which the polarizing film is attached will be described below. Figures 23A to 23C show a second example of ornamentation to be applied to the thermoplastic resin casing. Usually, resin casings for personal computers, electrical appliances, etc. are required to bear marks such as company names, product names, and logos. A description will be given of how such a seal is applied as ornament to the thermoplastic resin casing of the present invention. Here, before forming the polarizing film 2 shown in Figure 23A, a mark-bearing layer containing letters, symbols, or geometrical figures, such as "FFFFFFFFF" representing a company name, product name, logo, or the like, is formed by painting or like means on the back surface of the polarizing film 2 that contacts the molding resin 1, as shown in Figure 23B.

Then, as shown in Figure 23C, the polarizing film 2 whose back surface is thus printed is formed into the prescribed shape, and the thermoplastic resin 1 is injection-molded to complete the fabrication of the thermoplastic resin casing B6. Figure 24 is a cross-sectional view showing the structure in which the second example of ornamentation is applied to the thermoplastic resin casing treated with the adhesion enhancing processing shown in Figure 22B. Figure 24 shows the completed structure of the thermoplastic resin casing B6; as shown, the seal-bearing layer "d" is held fixed between the adhesive layer "a" and the polarizing film 2.

Here, as the seal-bearing layer is formed on the plane surface of the polarizing film as shown in Figure 23C, if the thermoplastic resin casing B6 is formed in a three-dimensional structure the seal-bearing layer may be distorted. In this case, the distorted condition should be precalculated, and correction should be made so that the seal looks natural when the casing is formed. The formation of the seal-bearing layer is not limited to the case of Figure 22B, but can be applied to other adhesion enhancing examples.

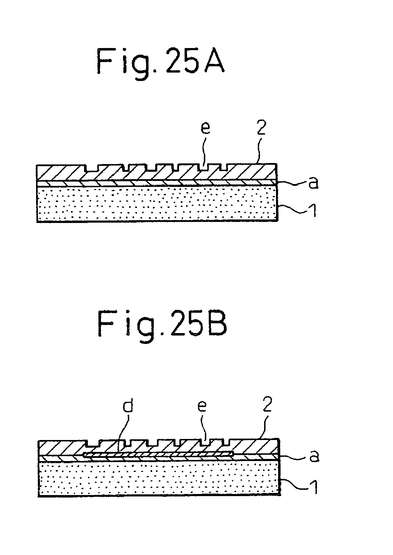

Figures 25A and 25B show other specific examples according to the second example of ornamentation to be applied to the thermoplastic resin casing. In these other specific examples according to the second example of ornamentation, engraving is applied to the polarizing film 2 itself and is intended to provide a decorative effect by the engraving in addition to the decorative effect of the polarizing film 2. In Figure 25A, as one example implementing a third example of ornamentation, after the thermoplastic resin casing is completed, engraving is applied, for example, by a CO₂ laser, to the upper surface of the polarizing film 2 to form a mark-engraved layer "e". The formation of this mark-engraved layer "e" may be performed before forming the polarizing film 2 into shape.

Figure 25B shows an example in which the mark-engraved layer "e" is formed on top of the seal-bearing layer "d" of the second example of ornamentation shown in Figure 24. Here, a CO₂ laser is used for engraving; the CO₂ laser is suitable for processing the polarizing film 2 because the polarizing film 2 is formed from a transparent material.

The method of decorating the thermoplastic resin casing by applying or bonding the polarizing film has been described with reference to various embodiments. In each specific example of the thermoplastic resin casing according to the second to fourth embodiments described above, decoration has been applied to the thermoplastic resin by first placing the polarizing film on a mold having a recess of a prescribed shape, then forming the polarizing film into the shape of the recess by evacuating air from the recess or blowing pressurized air or the like, and finally injecting the thermoplastic resin into the recess. The thermoplastic resin casing with the polarizing film attached to it can be fabricated in this manner.

However, instead of first forming the polarizing film into the shape of the recess and then injecting the thermoplastic resin into the recess thereby making the polarizing film adhere to the thermoplastic resin as in the above embodiments, another method may be employed that can make the polarizing film adhere, without creasing, to the thermoplastic resin when injecting the thermoplastic resin. According to this method of decoration, there is no need to form an evacuation hole in the mold or to provide a special device for blowing air or the like.

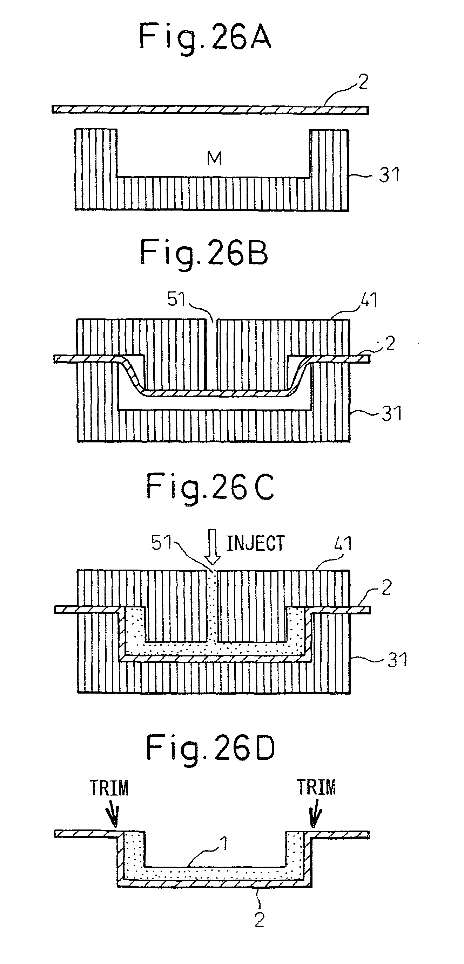

Figures 26A to 26D show the process for making the polarizing film adhere to the thermoplastic resin when injecting the thermoplastic resin, the process being a modification of the fabrication process according to the fourth specific example of the thermoplastic resin casing shown in Figures 11A to 11D. In common with the case of Figures 11A to 11D, this modified example uses a mold 31 having the recess M formed in the prescribed shape and the injection molding die 41 for injecting the thermoplastic resin into the recess. In Figures 26A to 26D, the fabrication steps according to the modified example are shown in the form of cross-sectional views of the molds. As in Figures 11A to 11D, Figures 26A to 26D show the fabrication steps in the order of fabrication.

First, in Figure 26A, the polarizing film 2 is placed on the mold 31 having the recess M formed in the prescribed shape. Next, as shown in Figure 26B, the injection molding die 41 is pressed against the mold 31 by interposing the polarizing film therebetween. At this time, the polarizing film 2 is deformed as it is pressed into the recess M by the injection molding die 41, as shown in the figure.

Thereafter, while maintaining the above condition, the thermoplastic resin is injected through the injection hole 51 formed in the injection molding die 41, as shown in Figure 26C. At this time, the polarizing film 2 is pressed onto the interior surface of the recess M of the mold 31, while being heated, by the injection pressure of the injected thermoplastic resin. As a result, the polarizing film 2 is formed into the prescribed shape of the recess M, while being made to adhere to the thermoplastic resin. During the forming, the polarizing film 2 is stretched, while being heated, by the injection pressure of the injected thermoplastic resin and adheres to the thermoplastic resin without creasing.

After the injected thermoplastic resin is formed into the prescribed shape in the recess M of the mold 31, the injection molding die 41 is withdrawn and the molding is removed from the mold 31; thus, the thermoplastic resin is formed into the prescribed shape conforming to the interior surface of the polarizing film 2 retained in the prescribed shape, as shown in Figure 26D. Then, the polarizing film 2 is trimmed at positions indicated by arrows shown in Figure 26D, to complete the fabrication of the thermoplastic resin casing B2 having the shape shown in Figure 9.

The thermoplastic resin casing of the present invention has been described for the case where the casing body is formed from a one-piece resin mass having a continuous surface, but the invention is not limited to this particular structure, and it will be appreciated that the fabrication method of the present invention can also be applied to the fabrication of a thermoplastic resin casing having an opening of a prescribed shape, for example, in or near the center of the casing body. In this fabrication method, as the thermoplastic resin is formed after forming the polarizing film into shape, the opening is also covered with the polarizing film. In this case, as the polarizing film is trimmed to remove unwanted portions in the final fabrication step of the thermoplastic resin casing, the portion of the polarizing film covering the opening should also be removed in this step.

The thermoplastic resin casing produced by each of the above-described fabrication methods can be used as a container for holding an article therein; if the thermoplastic resin casing is formed from a transparent or translucent material so that natural light such as sunlight and light produced by an organic EL or light-emitting diode or the like can pass through the casing, then the thermoplastic resin casing can also be used as an ornament having a special decorative effect by reflecting ambient light such as natural light iridescently while allowing light from inside the casing to be projected outside.

Further, when the thermoplastic resin casing is used as a case or panel for an electrical appliance that is equipped with a lighting device such as an organic EL or light-emitting diode for illuminating the casing, if the thermoplastic resin casing is formed from a translucent material the lighting device mounted inside the casing is not visible from the outside when the lighting device is off, and the iridescent color effect due to the ambient light is produced on the surface of the casing. Conversely, when the lighting device is on, the produced light can be recognized from the outside, and the casing can thus be illuminated while producing an iridescent decorative effect on the surface of the casing.

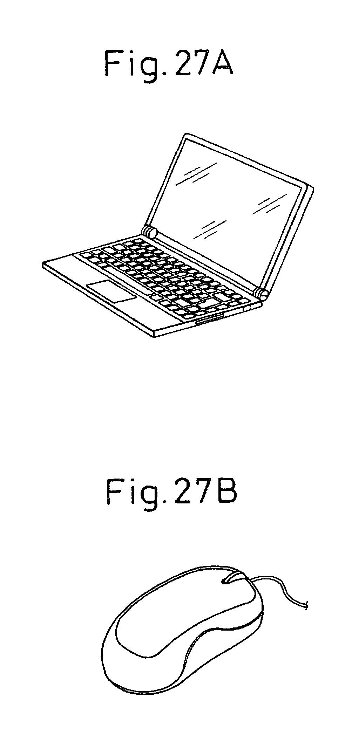

Figures 27A to 32B show application examples of the thermoplastic resin casings produced in accordance with the fabrication methods of the first to fifth embodiments of the present invention that can create the above-described decorative effects. These application examples will be described below.

Figures 27A and 27B show examples in which the thermoplastic resin casings produced in accordance with the fabrication methods of the first to fifth embodiments are applied to a personal computer and related products. In the example of Figure 27A, the decorative effects according to the present invention are applied to the main unit case of the personal computer, the housing case of the display panel, the keys on the keyboard, or the like. In these applications, when forming each case in a one-piece structure, the decorative effects can be applied over the entire surface of the case including not only flat portions but also curved portions. Figure 27B shows an example in which the casing is applied to a peripheral device, for example, a mouse, to be connected to the personal computer. Even in the case of a product such as a mouse whose entire surface is made up of intricate curved faces, the decorative effects can be provided to the entire surface of the mouse by attaching the polarizing film without it creasing.

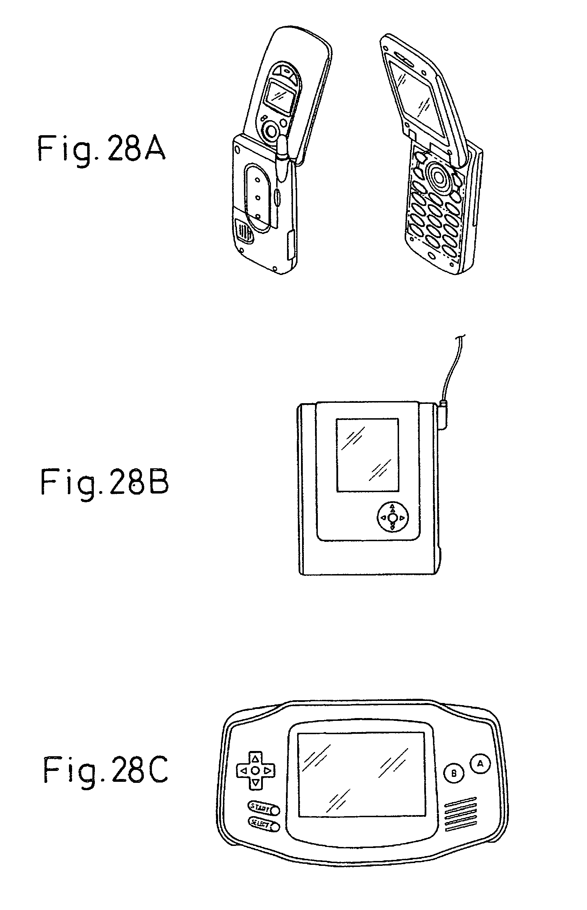

Figures 28A to 28C show examples in which the thermoplastic resin casings produced in accordance with the fabrication methods of the first to fifth embodiments are applied to portable electronic appliances. As examples of the portable electronic appliances, Figure 28A shows a portable telephone, Figure 28B shows a portable audio player, and Figure 28C shows a portable game player. In these portable electronic appliances also, resin casings are often used, and each casing is made up of intricate curved and plane faces; accordingly, by applying the thermoplastic resin casing of the present invention, decoration can be applied to the casing of the appliance in a simple and effective manner.

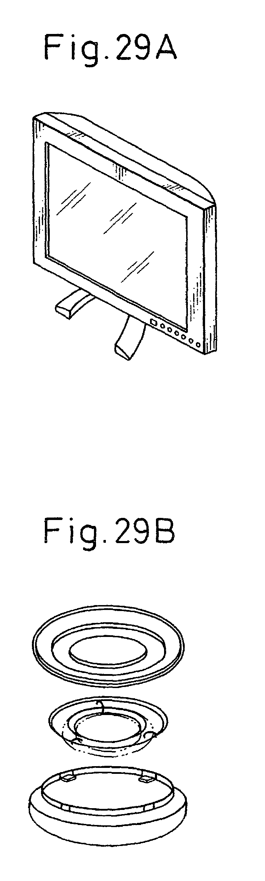

Figures 29A and 29B show examples in which the thermoplastic resin casings produced in accordance with the fabrication methods of the first to fifth embodiments are applied to household electrical appliances. As typical examples of the household electrical appliances, Figure 29A shows a television apparatus, and Figure 29B shows a ceiling-mounted lighting device. For the television apparatus, the thermoplastic resin casing of the present invention can be used to decorate the bezel encasing the liquid crystal display panel or the supporting base of the apparatus. Figure 29B shows the ceiling-mounted lighting device broken into its components parts, i.e., the mounting base, the fluorescent lamp support, and the lighting cover or globe, and the decoration by the polarizing film of the present invention can be applied to any portion of these parts that needs decorating.

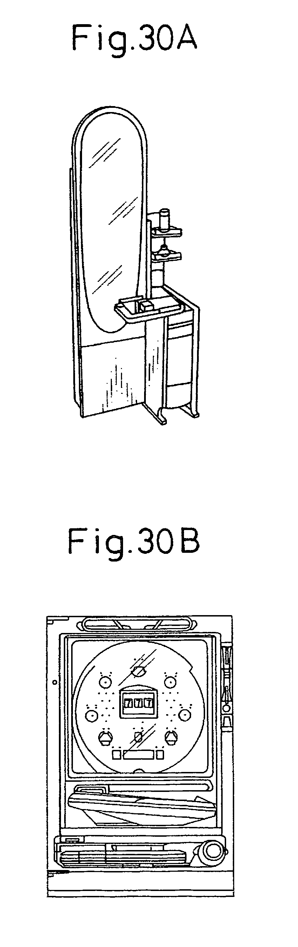

Figures 30A and 30B show examples in which the thermoplastic resin casings produced in accordance with the fabrication methods of the first to fifth embodiments are applied to furniture or fittings. Figure 30A shows a dresser as an example of a resin-made interior product, and Figure 30B shows a pinball machine as an example of an amusement-related apparatus. In these applications also, the decoration by the polarizing film of the present invention can be applied to any portion that needs decorating.

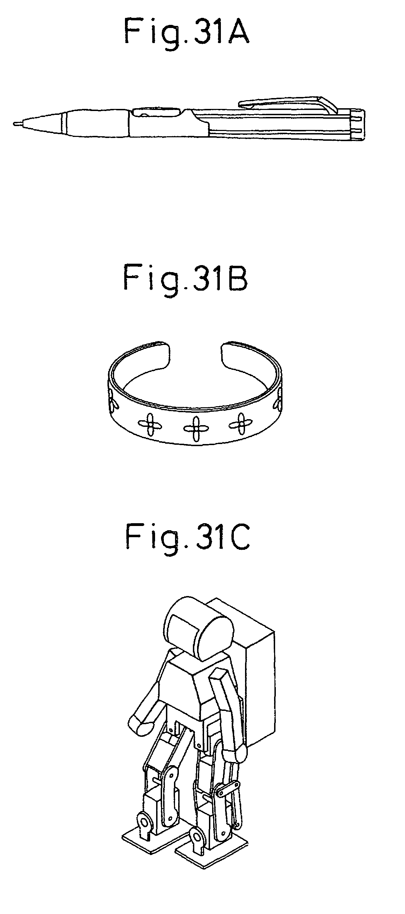

Figures 31A to 31C show examples in which the thermoplastic resin casings produced in accordance with the fabrication methods of the first to fifth embodiments are applied to products such as stationery, ornaments, toys, etc. Figure 31A shows a writing instrument such as a ballpoint pen as an example of resin-made stationery, Figure 31B shows a bracelet or headband as an example of a resin-made accessory to be worn on a body, and Figure 31C shows a plastic model of a robot as an example of a toy. In these applications also, the decoration by the polarizing film of the present invention can be applied to any portion that needs decorating when molding the resin-made product.

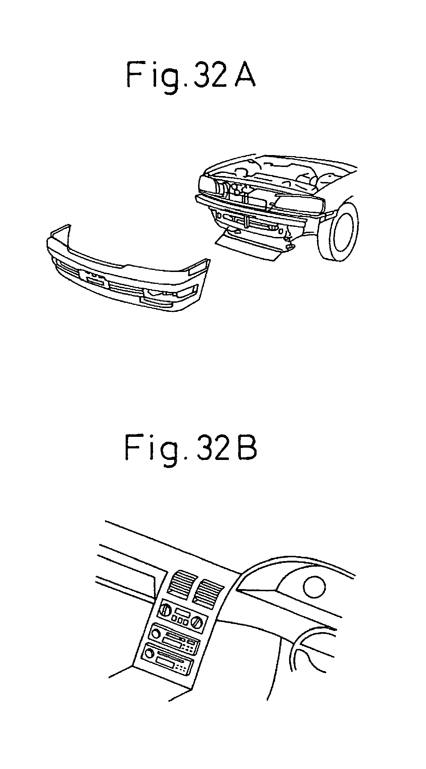

Further, Figures 32A and 32B show examples in which the thermoplastic resin casings produced in accordance with the fabrication methods of the first to fifth embodiments are applied to vehicle interior and exterior decorative parts. Figure 32A shows a bumper of a passenger car or the like as an example of a vehicle exterior part, and Figure 32B shows a dashboard panel in front of the driver's seat in a passenger car or the like as an example of a vehicle interior part. In these applications also, the decoration by the polarizing film of the present invention can be applied, to any portion that needs decorating, when molding the resin-made product.

## Claims

1. A thermoplastic resin casing (B1) having a protrusion of a prescribed shape containing a curved surface, the thermoplastic resin casing (B1) **characterized in that** a film (2) having an optical interference effect is attached so as to conform to said prescribed shape of a thermoplastic resin body (1) which forms said protrusion, and said film (2) is formed by laminating a plurality of thin films (F1,F2,F3) of different refractive indices, wherein each thin film partially reflects incident light rays at a first surface of the thin film and partially refracts those rays, the refracted rays being reflected at a second surface of the thin film and thereafter passing out through the first surfaces of the thin films where the rays reflected by the second surfaces of the thin films interfere with the rays reflected by the first surfaces.

2. A thermoplastic resin casing (B1) as claimed in claim 1, wherein said film (2) is laminated to said thermoplastic resin body (1) by interposing an adhesive layer therebetween.

3. A thermoplastic resin casing (B1) as claimed in claim 1, wherein said film (2) is laminated to said thermoplastic resin body (1) by interposing an adhesive layer and a binding layer therebetween.

4. A thermoplastic resin casing (B1) as claimed in claim 1, wherein said film (2) is laminated to said thermoplastic resin body (1) under heat and pressure.

5. A thermoplastic resin casing (B1) as claimed in claim 1, wherein said film (2) is laminated to said thermoplastic resin body (1) under heat and pressure by interposing an adhesive layer therebetween.

6. A thermoplastic resin casing (B1) as claimed in any one of claims 1 to 5, wherein at least one surface of said film (2) is embossed.

7. A thermoplastic resin casing (B1) as claimed in any one of claims 1 to 6, wherein said thermoplastic resin body (1) and said film (2) laminated together are provided with projections and depressions.

8. A thermoplastic resin casing (B1) as claimed in any one of claims 1 to 7, wherein said thermoplastic resin body (1) is colored.

9. A thermoplastic resin casing (B1) as claimed in any one of claims 1 to 8, wherein said protrusion of said thermoplastic resin body (1) is formed from a transparent plate, and an interior surface of said protrusion is decorated partially or entirely in a single color or in a plurality of colors.

10. A thermoplastic resin casing (B1) as claimed in any one of claims 1 to 9, wherein a surface of said film (2) is decorated with marks.

11. A thermoplastic resin casing (B1) as claimed in any one of claims 1 to 10, wherein said film (2) is attached to both an exterior side and an interior side of said thermoplastic resin body (1) that forms said protrusion.

12. A thermoplastic resin casing (B1) as claimed in any one of claims 1 to 11, wherein a colorless or a colored and transparent or a translucent cover layer is deposited on top of said film (2) attached to said thermoplastic resin body (1).

13. A method for fabricating a thermoplastic resin casing (B1) having a protrusion of a prescribed shape containing a curved surface, the method **characterized in that**:
a first film (2) having an optical interference effect and formed by laminating a plurality of thin films (F1,F2,F3) of different refractive indices, is placed on a mold (3) having a recess of a prescribed shape, wherein each thin film partially reflects incident light rays at a first surface of the thin film and partially refracts those rays, the refracted rays being reflected at a second surface of the thin film and thereafter passing out through the first surfaces of the thin films where the rays reflected by the second surfaces of the thin films interfere with the rays reflected by the first surfaces, and
an injection molding die (4) is placed onto said mold (3) with said first film (2) interposed therebetween, and said thermoplastic resin casing (B1) is hot formed together with said first film (2) by injecting a thermoplastic resin into a recess formed by said first film (2).

14. A method for fabricating a thermoplastic resin casing (B1) as claimed in claim 13, wherein said injection molding die (4) has a protrusion that matches said recess formed by said first film (2).

15. A method for fabricating a thermoplastic resin casing (B1) as claimed in claim 13 or 14, wherein said first film (2) is placed on said mold (3) and is formed into the shape of said recess by being pressed into said recess.

16. A method for fabricating a thermoplastic resin casing (B1) as claimed in claim 13 or 14, wherein said first film (2) is placed on said mold (3) and is formed into the shape of said recess by evacuating air from said recess.

17. A method for fabricating a thermoplastic resin casing (B1) as claimed in claim 16, wherein the air is evacuated from said recess through a plurality of evacuation holes (6) formed in said mold (3).

18. A method for fabricating a thermoplastic resin casing (B1) as claimed in claim 16, wherein the air is evacuated from said recess through an edge portion where said first film (2) contacts said recess.

19. A method for fabricating a thermoplastic resin casing (B1) as claimed in claim 16, wherein said mold (3) has a small recessed portion which communicates with said recess through an edge portion where said first film (2) contacts said recess, and wherein
the air is evacuated from said recess through an evacuation hole (6) formed in said small recessed portion.

20. A method for fabricating a thermoplastic resin casing (B1) as claimed in any one of claims 13 to 19, wherein an adhesive layer is formed on a bonding surface of said first film (2).

21. A method for fabricating a thermoplastic resin casing (B1) as claimed in claim 20, wherein a binding layer is formed on an upper surface of said adhesive layer.

22. A method for fabricating a thermoplastic resin casing (B1) as claimed in any one of claims 13 to 19, wherein a bonding surface of said first film (2) is treated by a surface-reforming treatment to facilitate adhesion.

23. A method for fabricating a thermoplastic resin casing (B1) as claimed in claim 22, wherein an adhesive layer is formed on said surface treated by said surface-reforming treatment.

24. A method for fabricating a thermoplastic resin casing (B1) as claimed in claim 22, wherein an adhesive layer is formed by interposing a binding layer on said surface treated by said surface-reforming treatment.

25. A method for fabricating a thermoplastic resin casing (B1) as claimed in any one of claims 20 to 24, wherein
a second film (21) having an optical interference effect and formed by laminating a plurality of thin films (F1,F2,F3) of different refractive indices is placed on a second mold (43) having a protrusion of a shape that matches said recess, and said second film (21) is formed into the shape of said protrusion, and
said thermoplastic resin casing (B1) is hot formed together with said first film (2) and second film (21) by injecting a thermoplastic resin between said first film (2) and said second film (21).

26. A method for fabricating a thermoplastic resin casing (B1) as claimed claim 25, wherein said second film (21) are formed by applying a vacuum or by applying pressure.

27. A method for fabricating a thermoplastic resin casing (B1) as claimed in any of one of claims 13 to 26 wherein, after said thermoplastic resin casing (B1) is formed, unwanted portions are removed by trimming.

28. A method for fabricating a thermoplastic resin casing (B1) as claimed in any one of claims 13 to 27, wherein
a colorless or a colored and transparent or a translucent cover layer is formed on top of said first film (2).

29. A method for fabricating a thermoplastic resin casing (B1), as claimed in any one of claims 13 to 24, wherein
said first film (2) placed on said mold is formed into the shape of said recess by either vacuum forming or air-pressure forming,
after said first film (2) is formed into the shape of said recess, an injection molding die (4) is placed onto said mold (3) with said first film (2) interposed therebetween, and
said thermoplastic resin casing is produced by hot forming together with said first film by injecting a thermoplastic resin between said first film (2) and said injection molding die (4).

## Patentansprüche

1. Thermoplastisches Harzgehäuse (B1) mit einem Vorsprung einer vorgeschriebenen Form, der eine gekrümmte Fläche aufweist, wobei das thermoplastische Harzgehäuse (B1) **dadurch gekennzeichnet ist, dass** ein Film (2) mit einer optischen Interferenzwirkung angebracht ist, um mit der vorgeschriebenen Form eines thermoplastischen Harzkörpers (1), der den Vorsprung bildet, konform zu sein, und der Film (2) durch Laminieren einer Mehrzahl von dünnen Filmen (F1, F2, F3), die unterschiedliche Brechungsindizes aufweisen, gebildet ist, wobei jeder dünne Film einfallende Lichtstrahlen an einer ersten Fläche des dünnen Films teilweise reflektiert und diese Strahlen teilweise bricht, die gebrochenen Strahlen an einer zweiten Fläche des dünnen Films reflektiert werden, und anschließend durch die ersten Flächen der dünnen Filme heraus verlaufen, wo die Strahlen, die durch die zweiten Flächen der dünnen Filme reflektiert werden, mit den Strahlen, die durch die ersten Flächen reflektiert werden, interferieren.

2. Thermoplastisches Harzgehäuse (B1) nach Anspruch 1, bei dem der Film (2) und der thermoplastische Harzkörper (1) laminiert werden, indem eine Klebeschicht dazwischen angeordnet wird.

3. Thermoplastisches Harzgehäuse (B1) nach Anspruch 1, bei dem der Film (2) und der thermoplastische Harzkörper (1) laminiert werden, indem eine Klebeschicht und eine Bindungsschicht dazwischen angeordnet werden.

4. Thermoplastisches Harzgehäuse (B1) nach Anspruch 1, bei dem der Film (2) und der thermoplastische Harzkörper (1) unter Wärme und Druck laminiert werden.

5. Thermoplastisches Harzgehäuse (B1) nach Anspruch 1, bei dem der Film (2) und der thermoplastische Harzkörper (1) unter Wärme und Druck laminiert werden, indem eine Klebeschicht dazwischen angeordnet wird.

6. Thermoplastisches Harzgehäuse (B1) nach einem der Ansprüche 1 bis 5, bei dem mindestens eine Fläche des Films (2) geprägt ist.

7. Thermoplastisches Harzgehäuse (B1) nach einem der Ansprüche 1 bis 6, bei dem der thermoplastische Harzkörper (1) und der Film (2), die zusammen laminiert sind, mit Vorsprüngen und Einsenkungen versehen sind.

8. Thermosplastisches Harzgehäuse (B1) nach einem der Ansprüche 1 bis 7, bei dem der thermoplastische Harzkörper (1) farbig ist.

9. Thermoplastisches Harzgehäuse (B1) nach einem der Ansprüche 1 bis 8, bei dem der Vorsprung des thermoplastischen Harzkörpers (1) aus einer transparenten Platte gebildet ist, und eine innere Fläche des Vorsprungs teilweise oder vollständig in einer einzelnen Farbe oder in einer Mehrzahl von Farben dekoriert ist.

10. Thermoplastisches Harzgehäuse (B1) nach einem der Ansprüche 1 bis 9, bei dem eine Fläche des Films (2) mit Markierungen versehen ist.

11. Thermoplastisches Harzgehäuse (B1) nach einem der Ansprüche 1 bis 10, bei dem der Film (2) an einer äußeren Seite und einer inneren Seite des thermoplastischen Harzkörpers (1), der den Vorsprung bildet, angebracht ist.

12. Thermoplastisches Harzgehäuse (B1) nach einem der Ansprüche 1 bis 11, bei dem eine farblose oder eine farbige und transparente oder eine transluzente Deckschicht oben auf dem Film (2) aufgebracht ist, der an dem thermoplastischen Harzkörper (1) angebracht ist.

13. Verfahren zum Herstellen eines thermoplastischen Harzgehäuses (B1) mit einem Vorsprung einer vorgeschriebenen Form, der eine gekrümmte Fläche aufweist, wobei das Verfahren **dadurch gekennzeichnet ist, dass**:
ein erster Film (2), der einen optischen Interferenzeffekt aufweist und gebildet wird durch Laminieren einer Mehrzahl von dünnen Filmen (F1, F2, F3), die unterschiedliche Brechungsindizes aufweisen, auf einer Form (3), die eine Ausnehmung einer vorgeschriebener Form aufweist, platziert wird, wobei jeder dünne Film einfallende Lichtstrahlen an einer ersten Fläche des dünnen Films teilweise reflektiert und diese Strahlen teilweise bricht, wobei die gebrochenen Strahlen an einer zweiten Fläche des dünnen Films reflektiert werden und anschließend durch die ersten Flächen der dünnen Filme herausverlaufen, wo die Strahlen, die durch die zweiten Flächen der dünnen Filme reflektiert werden, mit den Strahlen, die durch die ersten Flächen reflektiert werden, interferieren, und
ein erstes Spritzgusswerkzeug (4) auf der Form (3) platziert wird, wobei der erste Film (2) dazwischen angeordnet ist, und das thermoplastische Harzgehäuse (B1) zusammen mit dem ersten Film (2) heiß geformt wird, indem ein thermoplastisches Harz in eine durch den ersten Film (2) gebildete Ausnehmung eingespritzt wird.

14. Verfahren zum Herstellen eines thermoplastischen Harzgehäuses (B1) nach Anspruch 13, wobei das Spritzgusswerkzeug (4) einen Vorsprung hat, der mit der Ausnehmung, die durch den ersten Film (2) gebildet wird, zusammenpasst.

15. Verfahren zum Herstellen eines thermoplastischen Harzgehäuses (B1) nach Anspruch 13 oder 14, wobei der erste Film (2) auf der Form (3) platziert und in die Form der Ausnehmung geformt wird, indem er in die Ausnehmung gepresst wird.

16. Verfahren zum Herstellen eines thermoplastischen Harzgehäuses (B1) nach Anspruch 13 oder 14, wobei der erste Film (2) auf der Form (3) platziert und in die Form der Ausnehmung geformt wird, indem Luft aus der Ausnehmung abgesaugt wird.

17. Verfahren zum Herstellen eines thermoplastischen Harzgehäuses (B1) nach Anspruch 16, wobei die Luft durch eine Mehrzahl von Absauglöchern (6), die in der Form (3) gebildet sind, aus der Ausnehmung abgesaugt wird.

18. Verfahren zum Herstellen eines thermoplastischen Harzgehäuses (B1) nach Anspruch 16, wobei die Luft durch einen Randbereich, wo der erste Film (2) die Ausnehmung kontaktiert, aus der Ausnehmung abgesaugt wird.

19. Verfahren zum Herstellen eines thermoplastischen Harzgehäuses (B1) nach Anspruch 16, wobei die Form (3) einen kleinen ausgenommenen Bereich aufweist, der mit der Ausnehmung über einen Randbereich, wo der erste Film (2) die Ausnehmung kontaktiert, kommuniziert und wobei
die Luft durch ein Absaugloch (6), das in dem kleinen ausgenommenen Bereich gebildet ist, aus der Ausnehmung abgesaugt wird.

20. Verfahren zum Herstellen eines thermoplastischen Harzgehäuses (B1) nach einem der Ansprüche 13 bis 19, wobei eine Klebeschicht auf einer Verbindungsfläche des ersten Films (2) gebildet wird.

21. Verfahren zum Herstellen eines thermoplastischen Harzgehäuses (B1) nach Anspruch 20, wobei eine Bindungsschicht auf einer oberen Fläche der Klebeschicht gebildet wird.

22. Verfahren zum Herstellen eines thermoplastischen Harzgehäuses (B1) nach einem der Ansprüche 13 bis 19, wobei eine Verbindungsfläche des ersten Films (2) durch eine Flächenreformierungsbehandlung behandelt wird, um die Haftung zu unterstützen.

23. Verfahren zum Herstellen eines thermoplastischen Harzgehäuses (B1) nach Anspruch 22, wobei eine Klebeschicht auf der Fläche gebildet wird, die durch die Flächenreformierungsbehandlung behandelt worden ist.

24. Verfahren zum Herstellen eines thermoplastischen Harzgehäuses (B1) nach Anspruch 22, wobei eine Klebeschicht gebildet wird, indem eine Bindungsschicht auf der Fläche, die durch die Flächenreformierungsbehandlung behandelt worden ist, dazwischen angeordnet wird.

25. Verfahren zum Herstellen eines thermoplastischen Harzgehäuses (B1) nach einem der Ansprüche 20 bis 24, wobei
ein zweiter Film (21), der einen optischen Interferenzeffekt aufweist und durch Laminieren einer Mehrzahl von dünnen Filmen (F1, F2, F3), die unterschiedliche Brechungsindizes aufweisen, gebildet ist, auf einer zweiten Form (43) platziert wird, die einen Vorsprung mit einer zu der Ausnehmung passenden Form aufweist, und der zweite Film (21) in die Form des Vorsprungs geformt wird, und
das thermoplastische Harzgehäuse (B1) zusammen mit dem ersten Film (2) und dem zweiten Film (21) heiß geformt wird, indem ein thermoplastisches Harz zwischen den ersten Film (2) und den zweiten Film (21) eingespritzt wird.

26. Verfahren zum Herstellen eines thermoplastischen Harzgehäuses (B1) nach Anspruch 25, wobei der zweite Film (21) gebildet wird, indem ein Vakuum oder Druck angewendet wird.

27. Verfahren zum Herstellen eines thermoplastischen Harzgehäuses (B1) nach einem der Ansprüche 13 bis 26, wobei, nachdem das thermoplastische Harzgehäuse (B1) gebildet ist, unerwünschte Bereiche durch Wegschneiden entfernt werden.

28. Verfahren zum Herstellen eines thermoplastischen Harzgehäuses (B1) nach einem der Ansprüche 13 bis 27, wobei
eine farblose oder eine farbige und transparente oder eine transluzente Deckschicht oben auf dem ersten Film (2) gebildet wird.

29. Verfahren zum Herstellen eines thermoplastischen Harzgehäuses (B1) nach einem der Ansprüche 13 bis 24, wobei
der erste Film (2), der auf der Form platziert worden ist, durch Vakuum-Formen oder durch Luftdruck-Formen in die Form der Ausnehmung gebildet wird,
nachdem der der erste Film (2) in die Form der Ausnehmung gebildet worden ist, ein Spritzgusswerkzeug (4) auf der Form (3) platziert wird, wobei der erste Film (2) dazwischen liegend angeordnet wird, und
das thermoplastische Harzgehäuse zusammen mit dem ersten Film durch Heißformen erzeugt wird, indem ein thermoplastisches Harz zwischen den ersten Film (2) und das Spritzgusswerkzeug (4) eingespritzt wird.

## Revendications

1. Boîtier en résine thermoplastique (B1) comportant une protubérance d'une forme prescrite contenant une surface incurvée, le boîtier en résine thermoplastique (B1) étant **caractérisé en ce qu'**un film (2) ayant un effet d'interférence optique est lié de manière à se conformer à ladite forme prescrite d'un corps en résine thermoplastique (1) qui forme ladite protubérance, et ledit film (2) est formé en lamifiant une pluralité de films minces (F1, F2, F3) de différents indices de réfraction, dans lequel chaque film mince réfléchit partiellement des rayons de lumière incidents au niveau d'une première surface du film mince et réfracte partiellement ces rayons, les rayons réfractés étant réfléchis au niveau d'une deuxième surface du film mince et traversant ensuite les premières surfaces des films minces où les rayons réfléchis par les deuxièmes surfaces des films minces interfèrent avec les rayons réfléchis par les premières surfaces.

2. Boîtier en résine thermoplastique (B1) selon la revendication 1, dans lequel ledit film (2) est lamifié sur ledit corps en résine thermoplastique (1) en interposant une couche adhésive entre eux.

3. Boîtier en résine thermoplastique (B1) selon la revendication 1, dans lequel ledit film (2) est lamifié sur ledit corps en résine thermoplastique (1) en interposant une couche adhésive et une couche de liaison entre eux.

4. Boîtier en résine thermoplastique (B1) selon la revendication 1, dans lequel ledit film (2) est lamifié sur ledit corps en résine thermoplastique (1) dans des conditions de chaleur et de pression.

5. Boîtier en résine thermoplastique (B1) selon la revendication 1, dans lequel ledit film (2) est lamifié sur ledit corps en résine thermoplastique (1) dans des conditions de chaleur et de pression en interposant une couche adhésive entre eux.

6. Boîtier en résine thermoplastique (B1) selon l'une quelconque des revendications 1 à 5, dans lequel au moins une surface dudit film (2) est bosselée.

7. Boîtier en résine thermoplastique (B1) selon l'une quelconque des revendications 1 à 6, dans lequel ledit corps en résine thermoplastique (1) et ledit film (2) lamifiés ensemble sont pourvus de protubérances et de creux.

8. Boîtier en résine thermoplastique (B1) selon l'une quelconque des revendications 1 à 7, dans lequel ledit corps en résine thermoplastique (1) est coloré.

9. Boîtier en résine thermoplastique (B1) selon l'une quelconque des revendications 1 à 8, dans lequel ladite protubérance dudit corps en résine thermoplastique (1) est formée à partir d'une plaque transparente, et une surface intérieure de ladite protubérance est décorée partiellement ou entièrement en une seule couleur ou en une pluralité de couleurs.

10. Boîtier en résine thermoplastique (B1) selon l'une quelconque des revendications 1 à 9, dans lequel une surface dudit film (2) est décorée avec des marques.

11. Boîtier en résine thermoplastique (B1) selon l'une quelconque des revendications 1 à 10, dans lequel ledit film (2) est fixé à la fois à un côté extérieur et à un côté intérieur dudit corps en résine thermoplastique (1) qui forme ladite protubérance.

12. Boîtier en résine thermoplastique (B1) selon l'une quelconque des revendications 1 à 11, dans lequel une couche de recouvrement incolore ou colorée et transparente ou translucide est déposée sur ledit film (2) fixé audit corps en résine thermoplastique (1).

13. Procédé pour fabriquer un boîtier en résine thermoplastique (B1) comportant une protubérance d'une forme prescrite contenant une surface incurvée, le procédé étant
**caractérisé en ce que** :
un premier film (2), ayant un effet d'interférence optique et formé en lamifiant une pluralité de films minces (F1, F2, F3) de différents indices de réfraction, est placé sur un moule (3) comportant un évidement d'une forme prescrite, dans lequel chaque film mince réfléchit partiellement des rayons de lumière incidents au niveau d'une première surface du film mince et réfracte partiellement ces rayons, les rayons réfractés étant réfléchis au niveau d'une deuxième surface du film mince et traversant ensuite les premières surfaces des films minces où les rayons réfléchis par les deuxièmes surfaces des films minces interfèrent avec les rayons réfléchis par les premières surfaces, et
une matrice de moulage par injection (4) est placée sur ledit moule (3) en interposant ledit premier film (2) entre eux, et ledit boîtier en résine thermoplastique (B1) est formé à chaud avec ledit premier film (2) en injectant une résine thermoplastique dans un évidement formé par ledit premier film (2).

14. Procédé pour fabriquer un boîtier en résine thermoplastique (B1) selon la revendication 13, dans lequel ladite matrice de moulage par injection (4) comporte une protubérance qui correspond audit évidement formé par ledit premier film (2).

15. Procédé pour fabriquer un boîtier en résine thermoplastique (B1) selon la revendication 13 ou 14, dans lequel ledit premier film (2) est placé sur ledit moule (3) et est formé en la forme dudit évidement en étant pressé dans ledit évidement.

16. Procédé pour fabriquer un boîtier en résine thermoplastique (B1) selon la revendication 13 ou 14, dans lequel ledit premier film (2) est placé sur ledit moule (3) et est formé en la forme dudit évidement en évacuant l'air dudit évidement.

17. Procédé pour fabriquer un boîtier en résine thermoplastique (B1) selon la revendication 16, dans lequel l'air est évacué dudit évidement à travers une pluralité d'orifices d'évacuation (6) formés dans ledit moule (3).

18. Procédé pour fabriquer un boîtier en résine thermoplastique (B1) selon la revendication 16, dans lequel l'air est évacué dudit évidement à travers une partie de bord où ledit premier film (2) est en contact avec ledit évidement.

19. Procédé pour fabriquer un boîtier en résine thermoplastique (B1) selon la revendication 16, dans lequel ledit moule (3) comporte une petite partie en retrait qui communique avec ledit évidement par l'intermédiaire d'une partie de bord où ledit premier film (2) est en contact avec ledit évidement, et dans lequel
l'air est évacué dudit évidement à travers un orifice d'évacuation (6) formé dans ladite petite partie en retrait.

20. Procédé pour fabriquer un boîtier en résine thermoplastique (B1) selon l'une quelconque des revendications 13 à 19, dans lequel une couche adhésive est formée sur une surface de liaison dudit premier film (2).

21. Procédé pour fabriquer un boîtier en résine thermoplastique (B1) selon la revendication 20, dans lequel une couche de liaison est formée sur une surface supérieure de ladite couche adhésive.

22. Procédé pour fabriquer un boîtier en résine thermoplastique (B1) selon l'une quelconque des revendications 13 à 19, dans lequel une surface de liaison dudit premier film (2) est traitée par un traitement de reformage de surface pour faciliter l'adhérence.

23. Procédé pour fabriquer un boîtier en résine thermoplastique (B1) selon la revendication 22, dans lequel une couche adhésive est formée sur ladite surface traitée par ledit traitement de reformage de surface.

24. Procédé pour fabriquer un boîtier en résine thermoplastique (B1) selon la revendication 22, dans lequel une couche adhésive est formée en interposant une couche de liaison sur ladite surface traitée par ledit traitement de reformage de surface.

25. Procédé pour fabriquer un boîtier en résine thermoplastique (B1) selon l'une quelconque des revendications 20 à 24, dans lequel
un deuxième film (21) ayant un effet d'interférence optique et formé en lamifiant une pluralité de films minces (F1, F2, F3) de différents indices de réfraction est placé sur un deuxième moule (43) comportant une protubérance d'une forme qui correspond audit évidement, et ledit deuxième film (21) est formé en la forme de ladite protubérance, et
ledit boîtier en résine thermoplastique (B1) est formé à chaud avec ledit premier film (2) et ledit deuxième film (21) en injectant une résine thermoplastique entre ledit premier film (2) et ledit deuxième film (21).

26. Procédé pour fabriquer un boîtier en résine thermoplastique (B1) selon la revendication 25, dans lequel ledit deuxième film (21) est formé en appliquant un vide ou en appliquant une pression.

27. Procédé pour fabriquer un boîtier en résine thermoplastique (B1) selon l'une quelconque des revendications 13 à 26, dans lequel, après que ledit boîtier en résine thermoplastique (B1) a été formé, les parties non souhaitées sont retirées par détourage.

28. Procédé pour fabriquer un boîtier en résine thermoplastique (B1) selon l'une quelconque des revendications 13 à 27, dans lequel
une couche de recouvrement incolore ou colorée et transparente ou translucide est formée sur ledit premier film (2).

29. Procédé pour fabriquer un boîtier en résine thermoplastique (B1), selon l'une quelconque des revendications 13 à 24, dans lequel
ledit premier film (2) placé sur ledit moule est formé en la forme dudit évidement soit par formage sous vide, soit par formage par pression d'air,
après que ledit premier film (2) a été formé en la forme dudit évidement, une matrice de moulage par injection (4) est placée sur ledit moule (3) en interposant ledit premier film (2) entre eux, et
ledit boîtier en résine thermoplastique est produit par formage à chaud avec ledit premier film en injectant une résine thermoplastique entre ledit premier film (2) et ladite matrice de moulage par injection (4).
